# EUROPEAN PATENT APPLICATION

(11) **EP 4 694 063 A1**
(43) Date of publication of application: **11.02.2026**
(21) Application number: 23931568.2
(22) Date of filing: 07.04.2023
(51) Int. Cl.: H04L 41/16, H04W 8/24

(54) **MODEL IDENTIFICATION METHOD AND APPARATUS, AND MEDIUM, COMMUNICATION DEVICE AND COMMUNICATION SYSTEM**

(71) Applicant: Beijing Xiaomi Mobile Software Co., Ltd., Beijing 100085 (CN)
(72) Inventor: LIU, Zhengxuan, Beijing 100085 (CN); LIU, Min, Beijing 100085 (CN); MU, Qin, Beijing 100085 (CN)
(74) Representative: Gunzelmann, Rainer
(86) International application number: PCT/CN2023/087092
(87) International publication number: WO 2024/207507

(57) **Abstract**

A model identification method and apparatus, and a storage medium, a communication device and a communication system. The method comprises: sending first information to a network device, wherein the first information is used by the network device to determine an AI/ML function supported by a terminal and/or an AI/ML model supported by the terminal. By means of the present disclosure, a network device can complete model identification of a terminal.

## Description

### TECHNICAL FIELD

The present disclosure relates to the field of communication technology, and more specifically to a model recognition method and apparatus, a medium, a communication device, and a communication system.

### BACKGROUND

In a communication system, artificial intelligence (AI)/machine learning (ML) models may be deployed in network nodes to perform prediction and inference through the AI/ML models to improve performance of the communication system.

### SUMMARY

The present disclosure provides a model recognition method and apparatus, a medium, a communication device, and a communication system.

According to a first aspect of embodiments of the present disclosure, a model recognition method is provided and performed by a terminal, including:
sending first information to a network device, in which the first information is used by the network device to determine an artificial intelligence/machine learning (AI/ML) functionality supported by the terminal and/or an AI/ML model supported by the terminal.

According to a second aspect of the embodiments of the present disclosure, a model recognition method is provided and performed by a network device, including:
receiving first information sent by a terminal;
determining, according to the first information, an artificial intelligence/machine learning (AI/ML) functionality supported by the terminal and/or an AI/ML model supported by the terminal.

According to a third aspect of the embodiments of the present disclosure, a model recognition method is provided and performed by a communication system including a terminal and a network device, including:
sending, by the terminal, first information to the network device; and
determining, by the network device according to the first information, an artificial intelligence/machine learning (AI/ML) functionality supported by the terminal and/or an AI/ML model supported by the terminal.

According to a fourth aspect of the embodiments of the present disclosure, a model recognition apparatus is provided, including:
a first sending module, configured to send first information to a network device, in which the first information is used by the network device to determine an artificial intelligence/machine learning (AI/ML) functionality supported by the terminal and/or an AI/ML model supported by the terminal.

According to a fifth aspect of the embodiments of the present disclosure, a model recognition apparatus is provided, including:
a receiving module, configured to receive first information sent by a terminal;
a first determining module, configured to determine, according to the first information, an artificial intelligence/machine learning (AI/ML) functionality supported by the terminal and/or an AI/ML model supported by the terminal.

According to a sixth aspect of the embodiments of the present disclosure, a terminal is provided, including:
a first processor; and
a first memory having instructions executable by the first processor.

The first processor is configured to execute the executable instructions to perform the method of the first aspect.

According to a seventh aspect of the embodiments of the present disclosure, a network device is provided, including:
a second processor; and
a second memory having instructions executable by the second processor.

The second processor is configured to execute the executable instructions to perform the method of the second aspect.

According to an eighth aspect of the embodiments of the present disclosure, a storage medium is provided, on which computer program instructions are stored. When the program instructions are executed by a processor, the steps of the model recognition method provided in the first aspect or the second aspect of the present disclosure are implemented.

According to a ninth aspect of the embodiments of the present disclosure, a program product is provided. When the program product is executed by a terminal, the terminal is caused to execute the model recognition method provided in the first aspect, or when the program product is executed by a network device, the network device to is caused to execute the model recognition method provided in the second aspect.

According to a tenth aspect of the embodiments of the present disclosure, a computer program is provided. When the computer program is executed on a computer, the computer is caused to execute the steps of the model recognition method provided in the first aspect or the second aspect.

The technical solution provided by the embodiments of the present disclosure may include the following beneficial effects: the terminal may send the first information to the network device, so that the network device may determine the AI/ML functionality supported by the terminal and/or the AI/ML model supported by the terminal based on the first information, thereby completing model recognition on the terminal.

It should be understood that the foregoing general description and the following detailed description are exemplary and explanatory only, and are not restrictive of the present disclosure.

### BRIEF DESCRIPTION OF THE DRAWINGS

The above and/or additional aspects and advantages of the present disclosure will become apparent and easily understood from the following description of the embodiments in conjunction with the accompanying drawings, in which:
FIG. 1a is a schematic diagram of a communication system according to an embodiment of the present disclosure;
FIG. 1b is a schematic diagram showing channel state information (CSI) compression feedback and recovery according to an embodiment of the present disclosure;
FIG. 2a is a flowchart of a model recognition method according to an embodiment of the present disclosure;
FIG. 2b is a flowchart of a model recognition method according to an embodiment of the present disclosure;
FIG. 2c is a flowchart of a model recognition method according to an embodiment of the present disclosure;
FIG. 3a is a flowchart of a model recognition method according to an embodiment of the present disclosure;
FIG. 3b is a flowchart of a model recognition method according to an embodiment of the present disclosure;
FIG. 3c is a flowchart of a model recognition method according to an embodiment of the present disclosure;
FIG. 3d is a flowchart of a model recognition method according to an embodiment of the present disclosure;
FIG. 3e is a flowchart of a model recognition method according to an embodiment of the present disclosure;
FIG. 3f is a flowchart of a model recognition method according to an embodiment of the present disclosure;
FIG. 4a is a flowchart of a model recognition method according to an embodiment of the present disclosure;
FIG. 4b is a flowchart of a model recognition method according to an embodiment of the present disclosure;
FIG. 4c is a flowchart of a model recognition method according to an embodiment of the present disclosure;
FIG. 4d is a flowchart of a model recognition method according to an embodiment of the present disclosure;
FIG. 5a is a flowchart of a model recognition method according to an embodiment of the present disclosure;
FIG. 5b is a flowchart of a model recognition method according to an embodiment of the present disclosure;
FIG. 5c is a flowchart of a model recognition method according to an embodiment of the present disclosure;
FIG. 5d is a flowchart of a model recognition method according to an embodiment of the present disclosure;
FIG. 5e is a flowchart of a model recognition method according to an embodiment of the present disclosure;
FIG. 5f is a flowchart of a model recognition method according to an embodiment of the present disclosure;
FIG. 6 is a flowchart of a model recognition method according to an embodiment of the present disclosure;
FIG. 7 is a schematic diagram showing the functionality of an AI-based CSI compression feedback and model ID according to an embodiment of the present disclosure;
FIG. 8 is a block diagram of a model recognition apparatus according to an embodiment of the present disclosure;
FIG. 9 is a block diagram of a model recognition apparatus according to an embodiment of the present disclosure;
FIG. 10 is a block diagram of a terminal according to an embodiment of the present disclosure; and
FIG. 11 is a block diagram of a network device according to an embodiment of the present disclosure.

### DETAILED DESCRIPTION

Embodiments of the present disclosure propose "a model recognition method". In some embodiments, the terms such as model recognition method, information processing method, communication method, etc. can be interchangeable, the terms, such as model recognition apparatus, information processing apparatus, communication apparatus, etc. can be interchangeable, and the terms such as communication system, information processing system, communication system, etc. can be interchangeable.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

The terms used in the embodiments of the present disclosure are only for the purpose of describing specific embodiments and are not intended to limit the present disclosure. In the embodiments of the present disclosure, unless otherwise specified, elements expressed in the singular form, such as "a", "an", "the", "above", "said", "aforementioned", "this", etc., may also include the plural expression. Predefined in the disclosure may be understood as defined, predefined, stored, pre-stored, pre-negotiated, pre-configured, solidified or pre-fired.

The prefixes such as "first" and "second" in the embodiments of the present disclosure are only used to distinguish different descriptive objects, and do not constitute restrictions on the position, order, priority, quantity or content of the descriptive objects. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first device" as an example, the number of "devices" can be one or more. In addition, the objects modified by different prefixes may be the same or different. For example, if the descriptive object is "device", then the "first device" and the "second device" may be the same device or different device, and their types may be the same or different. For another example, if the descriptive object is "information", then the "first information" and the "second information" may be the same information or different information, and their contents may be the same or different. In short, the usage of prefixes such as ordinal numbers to distinguish the described objects in the embodiments of the present disclosure does not constitute a limitation on the described objects. For the statement of the described objects, reference may be made to the description in the context of the claims or embodiments, and no unnecessary limitation will be constituted due to the usage of such prefixes.

In the embodiments of the present disclosure, "multiple" refers to two or more. In the embodiments of the present disclosure, "and/or" is used to describe the association relationship of associated objects, indicating three relationships that can exist independently. For example, A and/or B can represent: A exists alone, B exists alone, and A and B exist at the same time. In the embodiments of the present disclosure, description such as "at least one of A1, A2, ..., An (or at least one, at least one)" includes the situation where any one of A1, A2, ..., An exists alone, and also includes any combination of any multiple of A1, A2, ..., An, each of which can exist alone; for example, the description of "at least one of A, B, C" includes the situation where A exists alone, B exists alone, C exists alone, A and B are combined, A and C are combined, B and C are combined, and A and B and C are combined.

In some embodiments, "in one case, A; in another case, B", "in response to one case, A; in response to another case, B", etc., may include the following technical solutions according to the situation: A is executed independently of B, that is, in some embodiments, A; B is executed independently of A, that is, in some embodiments, B; A and B are selectively executed, that is, A or B is selected to execute in some embodiments; A and B are both executed, that is, A and B are executed in some embodiments. It is similar when there are more branches such as A, B, C, etc.

In some embodiments, the terms such as "in response to...", "in response to determining...", "in the case of...", "at the time of...", "when...", "if...", "if...", etc. can be used interchangeably.

In some embodiments, "including A", "comprising A", "used to indicate A", and "carrying A" can be interpreted as directly carrying A or indirectly indicating A.

In some embodiments, the terms such as "greater than", "greater than or equal to", "above", "higher than", "not smaller than" can be replaced with each other, and the terms such as "less than", "less than or equal to", "below", "lower than", "not greater than" can be replaced with each other.

In some embodiments, the terms such as "network element", "node", "function", "apparatus", "device", "system", "chip", "chip system" can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

**In** addition, each element, each row, or each column in the table of the embodiments of the present disclosure may be implemented as an independent embodiment, and the combination of any elements, any rows, or any columns may also be implemented as an independent embodiment.

It should be noted that all actions of acquiring signals, information or data in the present disclosure are carried out in compliance with the relevant data protection laws and policies of the country where the data is obtained and with the authorization given by the owner of the corresponding device.

Although the operations are described in a specific order in the accompanying drawings in the disclosed embodiments, it should not be understood that it is required to perform these operations in the specific order shown or in a serial order, or to perform all the operations shown to obtain the desired results. In certain environments, multitasking and parallel processing may be advantageous. In addition, sending multiple information through the same message is also advantageous.

The following describes an application environment of a model recognition method provided by the embodiments.

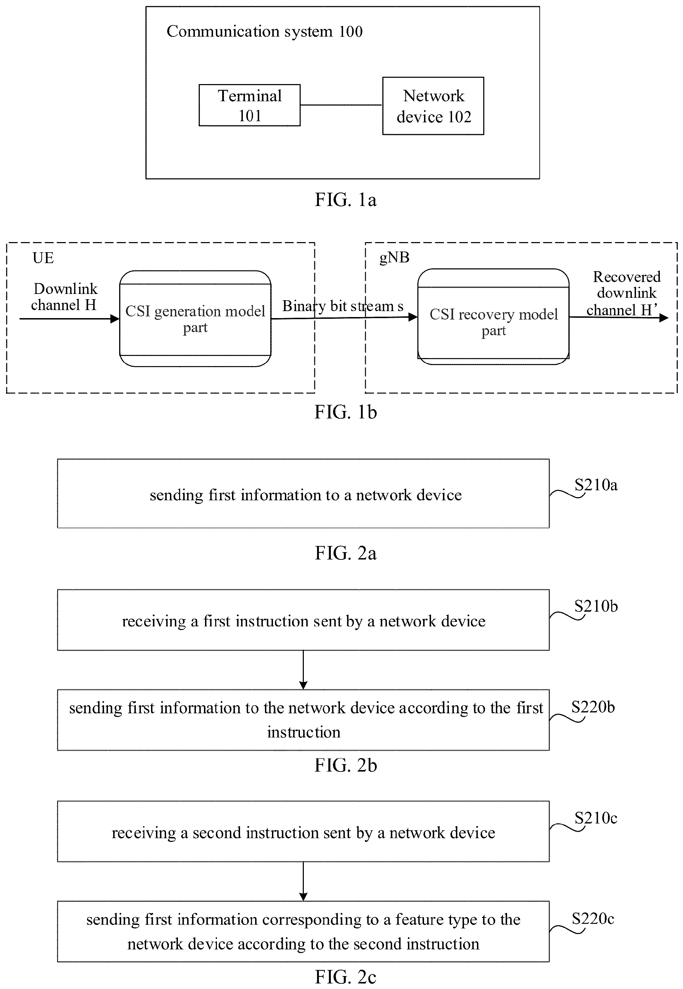

FIG. 1a is a schematic diagram of a communication system according to an embodiment of the present disclosure.

As shown in FIG. 1a, the communication system 100 may include a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the network device 102 may include an access network device or a core network device.

In some embodiments, the access network device may be, for example, a node or device that accesses a terminal to a wireless network, such as a radio access network (RAN). The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be a device including one or more network elements, or may be a plurality of devices or device groups, each including all or part of one or more network elements. The network element may be virtual or physical.

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the subjects shown in FIG. 1a, but are not limited thereto. The subjects shown in FIG. 1a are examples, and the communication system may include all or part of the subjects in FIG. 1a, or may include other subjects other than those shown in FIG. 1a, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In some embodiments of the present disclosure, AI/ML models may be deployed in network nodes, and prediction and inference may be performed through the AI/ML models to improve performance of the communication systems.

Optionally, the network node may be a terminal or a network device.

Optionally, an AI technology may be used to reduce feedback overhead of the terminal or improve an accuracy of a channel status information (CSI) feedback. For example, a bilateral AI/ML model based on a CSI generation model part on the terminal side and a CSI recovery model part on the network side may be used to realize the compression feedback and recovery of CSI, respectively. For another example, a time domain CSI prediction may be realized based on the AI/ML model on the UE side.

For example, FIG. 1b shows a schematic diagram showing the CSI compression feedback and recovery implemented based on the bilateral AI/ML model. The downlink channel information H is compressed through the CSI generation model part on the UE side and then quantized into a binary bit stream s to be sent to a gNB. The CSI recovery model part on the gNB side recovers H' which is similar to the original downlink information.

For the AI/ML model on the UE side or the model part on the UE side in the bilateral model, the network and the UE may reach a consensus through AI/ML functionality recognition and/or AI/ML model recognition, thereby realizing management of lifecycle of the model. The AI/ML functionality recognition and/or AI/ML model recognition may be referred to as the model recognition.

FIG. 2a is a flowchart of a model recognition method according to an embodiment of the present disclosure. As shown in FIG. 2a, the method may be performed by a terminal and include the following steps.

At step S210a, first information is sent to a network device.

In some implementations, the first information is used by the network device to determine an AI/ML functionality supported by the terminal and/or an AI/ML model supported by the terminal.

In some implementations, the network device may receive the first information sent by the terminal, and determine the AI/ML functionality supported by the terminal and/or the AI/ML model supported by the terminal based on the first information, thereby completing a process of recognizing the model supported by the terminal.

In some implementations, the AI/ML functionality supported by the terminal and/or the AI/ML model supported by the terminal may include all AI/ML functionalities and/or AI/ML models deployed and available in the terminal, or may include an AI/ML functionality and/or AI/ML model currently used by the terminal, which may be determined based on the first information sent by the terminal, or based on a policy for sending the first information by the terminal.

In some implementations, the AI/ML functionality supported by the terminal and/or the AI/ML model supported by the terminal may also be referred to as an AI/ML functionality corresponding to the terminal and/or an AI/ML model corresponding to the terminal.

In some implementations, the first information may separately include information used by the network device to determine the AI/ML functionality supported by the terminal, or may separately include information used by the network device to determine the AI/ML model supported by the terminal, or may simultaneously include information used by the network device to determine the AI/ML functionality supported by the terminal, and information used by the network device to determine the AI/ML model supported by the terminal.

The embodiments of the present disclosure specify that the terminal may send the first information to the network device by means of information reporting, so that the network device may determine the AI/ML functionality supported by the terminal and/or the AI/ML model supported by the terminal based on the first information, thereby completing model recognition of the terminal.

In some implementations, after determining the AI/ML functionality supported by the terminal and/or the AI/ML model supported by the terminal, the network device may perform lifecycle management of the model of the terminal according to the AI/ML functionality supported by the terminal and/or the AI/ML model supported by the terminal.

In some implementations, the network device performs lifecycle management of the model of the terminal based on the AI/ML functionality supported by the terminal and/or the AI/ML model supported by the terminal, which may include management such as activation, deactivation, selection, switching, etc. of the AI/ML model of the terminal.

In some implementations, the network device may instruct the terminal to activate the AI/ML functionality supported by the terminal according to the AI/ML functionality supported by the terminal, thereby explicitly activating the AI/ML functionality supported by the terminal. For example, the network device may instruct the terminal to activate the AI/ML functionality supported by the terminal through an indication message.

In some implementations, the network device may configure a configuration parameter corresponding to the AI/ML functionality supported by the terminal for the terminal according to the AI/ML functionality supported by the terminal, thereby implicitly activating the AI/ML functionality supported by the terminal.

In some implementations, the network device may instruct the terminal to activate the AI/ML model supported by the terminal based on the AI/ML model supported by the terminal, thereby activating the AI/ML model supported by the terminal. For example, the network device may instruct the terminal to activate the AI/ML model supported by the terminal through an indication message.

In some implementations, the network device may configure a configuration parameter corresponding to the AI/ML model supported by the terminal for the terminal according to the AI/ML model supported by the terminal, thereby implicitly activating the AI/ML model supported by the terminal.

In some implementations, the first information may include one or more of the following information:

first functionality information, second functionality information, third functionality information, a first model identifier, a second model identifier, a third model identifier, meta information associated with the terminal, or feature type information.

In some implementations, the feature type information is used to characterize a feature type supported by the terminal.

Thus, in the embodiments of the present disclosure, the feature type supported by the terminal may be recognized through the feature type information included in the first information. Optionally, the feature type information may be combined with other types of first information, for example, combined with at least one of the first functionality information, the second functionality information, the third functionality information, the first model identifier, the second model identifier, the third model identifier, or the meta information associated with the terminal, so that the network device determines the AI/ML functionality and/or AI/ML model corresponding to the feature type information.

In some implementations, the feature type may include an AI-based CSI compression feedback and an AI-based time domain CSI prediction.

For example, when the feature type supported by the terminal is the AI-based CSI compression feedback, the first information used to determine the AI/ML functionality supported by the terminal may be selected for use and reported. For another example, when the feature type supported by the terminal is the AI-based time domain CSI prediction, the first information used to determine the AI/ML model supported by the terminal may be selected for use and reported.

It should be noted that, in the above example, the correspondence between the feature type supported by the terminal and the first information used to determine the AI/ML functionality and/or the AI/ML model supported by the terminal may be exchanged according to actual needs. For example, when the feature type supported by the terminal is the AI-based time-domain CSI prediction, the first information used to determine the AI/ML functionality supported by the terminal may be selected for use and reported.

In some implementations, the first functionality information may be understood as fine-grained functionality information, which is used to describe all functionality types corresponding to a complete set of AI/ML functionalities supported by the terminal. Thus, the network device may determine the AI/ML functionalities supported by the terminal based on the received first functionality information.

Optionally, the first functionality information may describe all functionality types corresponding to a complete set of AI/ML functionalities supported by the terminal in the form of a functionality identifier. In this case, a correspondence between the functionality identifier and the fine-grained functionality information may be pre-stored. For example, in a mobile scenario, assume that functionality 1 corresponds to the terminal being able to predict channel information on up to 10 slots with an interval between adjacent slots being 2, which may be used for inference below 30 km/h. Assume that functionality 2 is defined as the terminal being able to predict channel information on up to 20 slots with the interval between adjacent slots being 5, which may be used for inference below 60 km/h. If the first functionality information includes functionality 1, the network device may determine, based on the first functionality information and the preset correspondence, that the AI/ML functionality supported by the terminal is a functionality that can predict channel information on a maximum of 10 slots with the interval between adjacent slots being 2, and can be used for inference below 30 km/h.

Optionally, the first functionality information may describe all functionality types corresponding to a complete set of AI/ML functionalities supported by the terminal in the form of a combination of multiple functionality types. In this case, the first functionality information may, for example, indicate that channel information on a maximum of 10 slots with the interval between adjacent slots being 2 can be predicted and inference below 30Km/h can be achieved. Thus, the network device may determine based on the first functionality information that the AI/ML functionality supported by the terminal is a functionality that can predict channel information on a maximum of 10 slots with the interval between adjacent slots being 2 and can be used for inference below 30Km/h.

The information indicating that channel information on a maximum of 10 slots with the interval between adjacent slots can be predicted and inference below 30Km/h can be achieved may be understood as a partial functionality type corresponding to a complete set of AI/ML functionalities.

In some embodiments, a complete set of AI/ML functionalities may be all functionality types supported by a model. Therefore, each functionality type corresponding to a complete set of AI/ML functionalities may be determined based on the actual situation of the model of the terminal.

Continuing with the previous example, a model in the terminal supports the functionality that can predict channel information on a maximum of 10 slots with the interval between adjacent slots being 2 and can be used for inference below 30 km/h. Then, each functionality type corresponding to a complete set of AI/ML functionalities may include: a maximum preset number of slots on which channel information can be predicted, an interval between adjacent slots, and a movement speed (i.e., speed of movement) for which inference can be achieved.

In some embodiments, the second functionality information can be understood as coarse-grained functionality information, which is used to describe partial functionality types corresponding to a complete set of AI/ML functionalities supported by the terminal. The first model identifier is used by the network device to determine the partial function types corresponding to a complete set of AI/ML functionalities supported by the terminal based on a preset corresponding relationship.

Thus, the network device may determine the AI/ML functionality supported by the terminal jointly based on the received second functionality information and the first model identifier.

For example, assuming that all functionality types corresponding to a complete set of AI/ML functionalities may include a channel scenario and a model output payload. In this case, the second functionality information may, for example, support the Uma (Urban Macro)/UMi (Urban Micro) scenario in the channel scenario, and support medium and high speed mobile scenario in the channel scenario. In the Uma/UMi scenario, the first model identifier may, for example, include ID (Identity document) 1 and ID2, which correspond to the AI/ML functionality that can support inference for a maximum payload size of 120 bits after quantization of the maximum compressed information and the AI/ML functionality that can support inference for a maximum payload size of 60 bits after quantization of the maximum compressed information, respectively. In the medium and high speed mobile scenario, the first model identifier may, for example, include ID3 and ID4, which correspond to the AI/ML model that can support inference for a maximum payload size of 120 bits after quantization of the maximum compressed information and the AI/ML model that can support inference for a maximum payload size of 60 bits after quantization of the maximum compressed information, respectively. In this case, if the second functionality information includes supporting the Uma/UMi scenario in the channel scenario, and the first model identifier includes ID1, the network device may determine that the AI/ML functionality supported by the terminal is an AI/ML functionality that supports the Uma/UMi scenario and supports inference for the maximum payload size of 120 bits after quantization of the maximum compressed information based on the second functionality information and the first model identifier.

In addition, considering that the functionality information may correspond to the model, for example, some functionalities are only supported by a certain model. Therefore, after determining the AI/ML functionality supported by the terminal, the corresponding AI/ML model can be obtained. Therefore, the network device may determine the AI/ML model supported by the terminal based on the functionality information and the model identifier. Therefore, in some embodiments, the first information may include third functionality information and a third model identifier, and the third functionality information and the third model identifier are used by the network device to determine the AI/ML model supported by the terminal.

In some embodiments, the third functionality information may be understood as coarse-grained functionality information, which is used to describe the partial functionality types corresponding to a complete set of AI/ML functionalities supported by the terminal. The third model identifier is used by the network device to determine the partial functionality types corresponding to a complete set of AI/ML functionalities supported by the terminal based on a preset corresponding relationship.

In some implementations, the meta information associated with the terminal is used by the network device to determine a parameter configuration of the AI/ML functionality supported by the terminal.

Consider that the model of the terminal may be a model with strong generalization ability, which can be used for inference or prediction of various different parameters, for example, used for inference or prediction of different numbers of ports. In this case, in order to fully determine the AI/ML functionality supported by the terminal, such as accurately determining the number of ports currently used by the terminal, after determining that the AI/ML functionality supported by the terminal is a functionality that can predict channel information on a maximum of 10 slots with the interval between adjacent slots being 2 and can be used for inference below 30Km/h, the number of ports supported by the terminal may be further determined in combination with the metadata associated with the terminal.

In some implementations, the meta information associated with the terminal is used by the network device to determine a parameter configuration of the AI/ML model supported by the terminal.

Similarly, consider that the model supported by the terminal may be a model with strong generalization ability, which can be used for inference or prediction of various different parameters, for example, used for inference or prediction of different numbers of ports. In this case, in order to fully determine the AI/ML model supported by the terminal, such as accurately determining the number of ports currently used by the terminal, it can be further determined in combination with the meta information associated with the terminal.

In some embodiments, the first information may separately include the meta information associated with the terminal, that is, the network device may determine the AI/ML functionality supported by the terminal and/or the AI/ML model supported by the terminal through the meta information associated with the terminal.

In some embodiments, the meta information associated with the terminal may be used in combination with other information used to determine the AI/ML functionality supported by the terminal and/or the AI/ML model supported by the terminal. For example, the first information may include the first functionality information and the meta information associated with the terminal; the first information may include the second functionality information, the first model identifier, and the meta information associated with the terminal; the first information may include the second model identifier and the meta information associated with the terminal; or the first information may include the third functionality information, the third model identifier, and the meta information associated with the terminal.

In some implementations, one second identification information may correspond to only one model, so that the network device may determine the AI/ML model supported by the terminal through the second identification information.

In some implementations, one second identification information may correspond to multiple models, so that the network device may determine multiple AI/ML models supported by the terminal through the second identification information.

In some implementations, when the first information is used by the network device to determine the AI/ML functionality supported by the terminal, the first information may include:
first functionality information, which is used to describe the AI/ML functionality supported by the terminal; or
second functionality information and a first model identifier, which are used by the network device to determine the AI/ML functionality supported by the terminal; or
a second model identifier, which is used by the network device to determine the AI/ML functionality supported by the terminal based on a preset corresponding relationship; or
meta information associated with the terminal, which is used by network devices to determine a parameter configuration of the AI/ML functionality supported by the terminal.

In the embodiments of the present disclosure, the terminal may send the first functionality information to the network device, so that the network may determine the AI/ML functionality supported by the terminal based on the first functionality information. The terminal may also send the second functionality information and the first model identifier to the network device, so that the network may determine the AI/ML functionality supported by the terminal based on the second functionality information and the first model identifier. The terminal may also send the second model identifier to the network device, so that the network may determine the AI/ML functionality supported by the terminal based on the second model identifier. The terminal may also send the meta information associated with the terminal to the network device, so that the network may determine the AI/ML functionality supported by the terminal based on the meta information associated with the terminal.

In some implementations, when the first information is used by the network device to determine the AI/ML model supported by the terminal, the first information includes:
a second model identifier, which is used by the network device to determine the AI/ML model supported by the terminal; or
third functionality information and a third model identifier, which are used by the network device to determine the AI/ML model supported by the terminal; or
meta information associated with the terminal, which is used by network devices to determine a parameter configuration of the AI/ML model supported by the terminal.

In the embodiments of the present disclosure, the terminal may send the third functionality information and the third model identifier to the network device, so that the network may determine the AI/ML model supported by the terminal based on the third functionality information and the third model identifier. The terminal may also send the second model identifier to the network device, so that the network may determine the AI/ML model supported by the terminal based on the second model identifier. The terminal may also send the meta information associated with the terminal to the network device, so that the network may determine the AI/ML model supported by the terminal based on the meta information associated with the terminal.

In some implementations, the meta information associated with the terminal may include one or more of the following information:
a transmitting antenna port corresponding to the terminal, a receiving antenna port corresponding to the terminal, carrier information of the terminal, the number of subbands supported by the terminal, or location information of the terminal.

In some implementations, the location information of the terminal may be ID information of a cell where the terminal is located.

In some implementations, a value range of the second model identifier is divided according to one or more of the following information: a feature type supported by the terminal, functionality information supported by the terminal, or meta information associated with the terminal.

In the embodiments of the present disclosure, the second model identifier may be grouped into different value ranges in advance according to the feature type supported by the terminal; or the second model identifier may be grouped into different value ranges according to the functionality information supported by the terminal; or the second model identifier may be grouped into different value ranges according to the meta information associated with the terminal; or the second model identifier may be grouped into different value ranges according to the feature type and the functionality information supported by the terminal; or the second model identifier may be grouped into different value ranges according to the feature type, the functionality information and the meta information supported by the terminal, etc.

For example, continuing with the above example, assuming that the terminal supports the feature type including an AI-based CSI compression feedback and an AI-based time domain CSI prediction, and there can be 1000 models for the AI-based CSI compression feedback and 1000 models for the AI-based time-domain CSI prediction, then the identifiers corresponding to the 1000 models for the AI-based CSI compression feedback may be numbered 1-1000, and the identifiers corresponding to the 1000 models for the AI-based time domain CSI prediction may be numbered 1001-2000. Thus, assuming that the second model identifier received by the network device is 500, the AI model numbered 500 may be determined from the models corresponding to the AI-based CSI compression feedback, so that the AI/ML model supported by the terminal can be accurately determined, and subsequently network device can perform lifecycle management of the model.

In some implementations, when the feature type supported by the terminal includes the AI-based CSI compression feedback, the first functionality information includes one or more of the following information:
a model output payload, a channel scenario, a network configuration parameter, or a movement speed.

In some implementations, when the feature type supported by the terminal includes the AI-based time domain CSI prediction, the first functionality information includes one or more of the following information:
a predicted time domain condition requirement, a channel scenario, a network configuration parameter, or a movement speed.

In some implementations, when the feature type supported by the terminal includes the AI-based CSI compression feedback, the second functionality information includes any one of the following information:
a model output payload, a channel scenario, a network configuration parameter, or a movement speed;
the third functionality information includes any one of the following information:
the model output payload, the channel scenario, the network configuration parameter, or the movement speed.

In some implementations, when the feature type supported by the terminal includes the AI-based time domain CSI prediction, the second functionality information includes any one of the following information:
a predicted time domain condition requirement, a channel scenario, a network configuration parameter, or a movement speed;
the third functionality information includes any one of the following information:
the predicted time domain condition requirement,, the channel scenario, the network configuration parameter, or the movement speed.

In some implementations, the predicted time domain condition requirement may include the number of predicted CSIs and a time interval between two predicted adjacent CSIs.

In some embodiments, when the feature type supported by the terminal includes the AI-based CSI compression feedback, combined with the foregoing content, it can be seen that the generation model part in the terminal and the recovery model part in the network device constitute a bilateral AI/ML model. In this case, the first model identifier may include a model ID and/or a pairing model ID, the second model identifier includes the model ID and/or the pairing model ID, and the third model identifier includes the model ID and/or the pairing model ID. The pairing model ID can be called a Paring model ID.

In some embodiments, when the feature type supported by the terminal includes the AI-based time domain prediction, the first model identifier includes a model ID, the second model identifier includes the model ID, and the third model identifier includes the model ID.

FIG. 2b is a flowchart of a model recognition method according to an embodiment of the present disclosure. As shown in FIG. 2b, the method may be performed by a terminal and include the following steps.

At step S210b, a first instruction sent by a network device is received.

At step S220b, first information is sent to the network device according to the first instruction.

In some implementations, the first information is used by the network device to determine an AI/ML functionality supported by the terminal and/or an AI/ML model supported by the terminal.

In some implementations, the first instruction is used to request the AI/ML functionality supported by the terminal and/or the AI/ML model supported by the terminal.

In some implementations, the first instruction is used to request the terminal to return the first information.

In some implementations, the first information may include a feature type, so that the network device may determine an AI/ML functionality supported by the terminal and corresponding to the feature type and/or an AI/ML model supported by the terminal and corresponding to the feature type.

In some implementations, the first information may include one or more of the following information:
first functionality information, second functionality information, third functionality information, a first model identifier, a second model identifier, a third model identifier, meta information associated with the terminal, or feature type information.

In some implementations, the first information is used by the network device to determine the AI/ML functionality supported by the terminal, the first information includes:
first functionality information, which is used to describe the AI/ML functionality supported by the terminal; or
second functionality information and a first model identifier, which are used by the network device to determine the AI/ML functionality supported by the terminal; or
a second model identifier, which is used by the network device to determine the AI/ML functionality supported by the terminal based on a preset corresponding relationship; or
meta information associated with the terminal, which is used by network devices to determine a parameter configuration of the AI/ML functionality supported by the terminal.

In some implementations, the first information is used by the network device to determine the AI/ML model supported by the terminal, the first information includes:
a second model identifier, which is used by the network device to determine the AI/ML model supported by the terminal; or
third functionality information and a third model identifier, which are used by the network device to determine the AI/ML model supported by the terminal; or
meta information associated with the terminal, which is used by network devices to determine a parameter configuration of the AI/ML model supported by the terminal.

In some implementations, the meta information associated with the terminal may include one or more of the following information:
a transmitting antenna port corresponding to the terminal, a receiving antenna port corresponding to the terminal, carrier information of the terminal, the number of subbands supported by the terminal, or location information of the terminal.

In some implementations, a value range of the second model identifier is divided according to one or more of the following information: a feature type supported by the terminal, functionality information supported by the terminal, or meta information associated with the terminal.

In some implementations, the feature type supported by the terminal includes an AI-based CSI compression feedback, the first functionality information includes one or more of the following information:
a model output payload, a channel scenario, a network configuration parameter, or a movement speed.

The feature type supported by the terminal includes an AI-based time domain CSI prediction, the first functionality information includes one or more of the following information:
a predicted time domain condition requirement, a channel scenario, a network configuration parameter, or a movement speed.

In some implementations, when the feature type supported by the terminal includes the AI-based CSI compression feedback, the second functionality information includes any one of the following information:
a model output payload, a channel scenario, a network configuration parameter, or a movement speed;
the third functionality information includes any one of the following information:
the model output payload, the channel scenario, the network configuration parameter, or the movement speed.

In some implementations, when the feature type supported by the terminal includes the AI-based time domain CSI prediction, the second functionality information includes any one of the following information:
a predicted time domain condition requirement, a channel scenario, a network configuration parameter, or a movement speed;
the third functionality information includes any one of the following information:
the predicted time domain condition requirement,, the channel scenario, the network configuration parameter, or the movement speed.

In some implementations, the feature type supported by the terminal includes the AI-based CSI compression feedback, the first model identifier includes a model ID and/or a pairing model ID, the second model identifier includes the model ID and/or the pairing model ID, and the third model identifier includes the model ID and/or the pairing model ID.

The feature type supported by the terminal includes the AI-based time domain prediction, the first model identifier includes a model ID, the second model identifier includes the model ID, and the third model identifier includes the model ID.

In the embodiment of the present disclosure, the network device may send the first instruction to the terminal, and the terminal may send the first information to the network device according to the first instruction after receiving the first instruction. That is, the embodiment of the present disclosure specify a condition or timing for the terminal to send the first instruction to the network device.

Regarding the detailed description of relevant steps or parameter definitions in the embodiments of the present disclosure, reference may be made to the above content and will not be repeated here.

FIG. 2c is a flowchart of a model recognition method according to an embodiment of the present disclosure. As shown in FIG. 2c, the method may be performed by a terminal and include the following steps.

At step S210c, a second instruction sent by a network device is received.

At step S220c, first information corresponding to a feature type is sent to the network device according to the second instruction.

In some implementations, the second instruction includes the feature type.

In some implementations, the first information corresponding to the feature type is used to determine an AI/ML functionality supported by the terminal and corresponding to the feature type and/or an AI/ML model supported by the terminal and corresponding to the feature type.

In some implementations, the second instruction is used to request the AI/ML functionality supported by the terminal and corresponding to the feature type and/or the AI/ML model supported by the terminal and corresponding to the feature type.

In some implementations, the second instruction is used to request the terminal to return the first information corresponding to the feature type.

In some implementations, the first information may include one or more of the following information:

first functionality information, second functionality information, third functionality information, a first model identifier, a second model identifier, a third model identifier, meta information associated with the terminal, or feature type information.

In some implementations, the first information is used by the network device to determine the AI/ML functionality supported by the terminal, the first information includes:
first functionality information, which is used to describe the AI/ML functionality supported by the terminal; or
second functionality information and a first model identifier, which are used by the network device to determine the AI/ML functionality supported by the terminal; or
a second model identifier, which is used by the network device to determine the AI/ML functionality supported by the terminal based on a preset corresponding relationship; or
meta information associated with the terminal, which is used by network devices to determine a parameter configuration of the AI/ML functionality supported by the terminal.

In some implementations, the first information is used by the network device to determine the AI/ML model supported by the terminal, the first information includes:
a second model identifier, which is used by the network device to determine the AI/ML model supported by the terminal; or
third functionality information and a third model identifier, which are used by the network device to determine the AI/ML model supported by the terminal; or
meta information associated with the terminal, which is used by network devices to determine a parameter configuration of the AI/ML model supported by the terminal.

In some implementations, the meta information associated with the terminal may include one or more of the following information:
a transmitting antenna port corresponding to the terminal, a receiving antenna port corresponding to the terminal, carrier information of the terminal, the number of subbands supported by the terminal, or location information of the terminal.

In some implementations, a value range of the second model identifier is divided according to one or more of the following information: a feature type supported by the terminal, functionality information supported by the terminal, or meta information associated with the terminal.

In some implementations, the feature type supported by the terminal includes an AI-based CSI compression feedback, the first functionality information includes one or more of the following information:
a model output payload, a channel scenario, a network configuration parameter, or a movement speed.

The feature type supported by the terminal includes an AI-based time domain CSI prediction, the first functionality information includes one or more of the following information:
a predicted time domain condition requirement, a channel scenario, a network configuration parameter, or a movement speed.

In some implementations, when the feature type supported by the terminal includes the AI-based CSI compression feedback, the second functionality information includes any one of the following information:
a model output payload, a channel scenario, a network configuration parameter, or a movement speed;
the third functionality information includes any one of the following information:
the model output payload, the channel scenario, the network configuration parameter, or the movement speed.

In some implementations, when the feature type supported by the terminal includes the AI-based time domain CSI prediction, the second functionality information includes any one of the following information:
a predicted time domain condition requirement, a channel scenario, a network configuration parameter, or a movement speed;
the third functionality information includes any one of the following information:
   the predicted time domain condition requirement,, the channel scenario, the network configuration parameter, or the movement speed.

In some implementations, the feature type supported by the terminal includes the AI-based CSI compression feedback, the first model identifier includes a model ID and/or a pairing model ID, the second model identifier includes the model ID and/or the pairing model ID, and the third model identifier includes the model ID and/or the pairing model ID.

The feature type supported by the terminal includes the AI-based time domain prediction, the first model identifier includes a model ID, the second model identifier includes the model ID, and the third model identifier includes the model ID.

In the embodiment of the present disclosure, the network device may send the second instruction to the terminal, and the terminal may send the first information corresponding to the feature type to the network device according to the second instruction after receiving the second instruction. That is, the embodiment of the present disclosure specify that, the network device may instruct the terminal to send the first information of the specified feature type, so that the network device may determine the AI/ML functionality supported by the terminal and of specified the feature type and/or the AI/ML model supported by the terminal and of specified the feature type.

Regarding the detailed description of relevant steps or parameter definitions in the embodiments of the present disclosure, reference may be made to the above content and will not be repeated here.

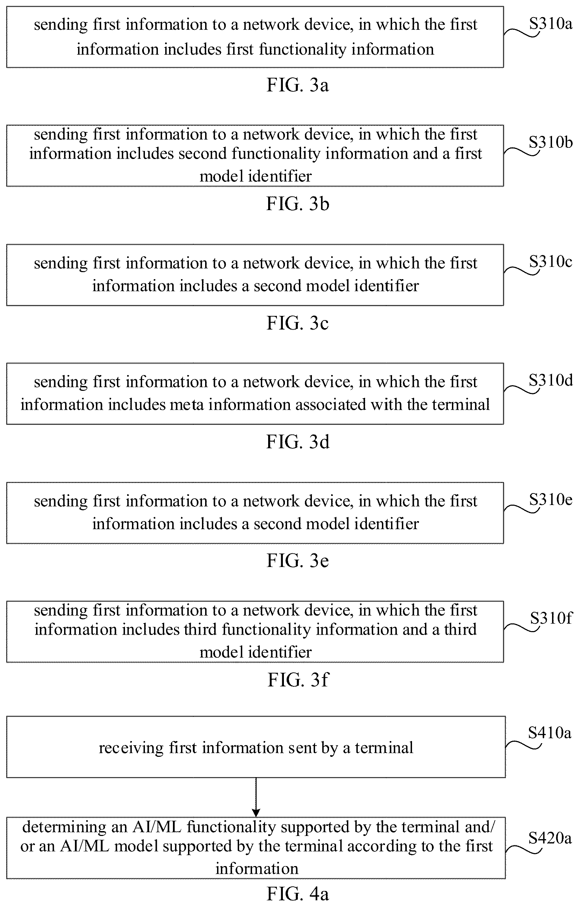

FIG. 3a is a flowchart of a model recognition method according to an embodiment of the present disclosure. As shown in FIG. 3a, the method may be performed by a terminal and include the following steps.

At step S310a, first information is sent to a network device, in which the first information includes first functionality information.

In some implementations, the first functionality information is used by the network device to determine an AI/ML functionality supported by the terminal.

In some implementations, in addition to the first functionality information, the first information further includes meta information associated with the terminal. The meta information associated with the terminal and the first functionality information are used by the network device to determine the AI/ML functionality supported by the terminal.

Regarding the detailed description of step S310a, reference may be made to the aforementioned embodiments and will not be repeated here.

In this embodiment of the present disclosure, the terminal may send the first functionality information to the network device, so that the network device may determine the AI/ML functionality supported by the terminal according to the first functionality information.

FIG. 3b is a flowchart of a model recognition method according to an embodiment of the present disclosure. As shown in FIG. 3b, the method may be performed by a terminal and include the following steps.

At step S310b, first information is sent to a network device, in which the first information includes second functionality information and a first model identifier.

In some implementations, the second functionality information and the first model identifier included in the first information are used by the network device to determine an AI/ML functionality supported by the terminal.

In some implementations, in addition to the second functionality information and the first model identifier, the first information further includes meta information associated with the terminal. The meta information associated with the terminal, the second functionality information and the first model identifier are used by the network device to determine the AI/ML functionality supported by the terminal.

Regarding the detailed description of step S310b, reference may be made to the aforementioned embodiments and will not be repeated here.

In this embodiment of the present disclosure, the terminal may send the second functionality information and the first model identifier to the network device, so that the network device may determine the AI/ML functionality supported by the terminal according to the second functionality information and the first model identifier.

FIG. 3c is a flowchart of a model recognition method according to an embodiment of the present disclosure. As shown in FIG. 3c, the method may be performed by a terminal and include the following steps.

At step S310c, first information is sent to a network device, in which the first information includes a second model identifier.

In some implementations, the second model identifier included in the first information is used by the network device to determine an AI/ML functionality supported by the terminal.

In some implementations, in addition to the second model identifier, the first information further includes meta information associated with the terminal. The meta information associated with the terminal and the second model identifier are used by the network device to determine the AI/ML functionality supported by the terminal.

Regarding the detailed description of step S310c, reference may be made to the aforementioned embodiments and will not be repeated here.

In this embodiment of the present disclosure, the terminal may send the second model identifier to the network device, so that the network device may determine the AI/ML functionality supported by the terminal according to the second model identifier.

FIG. 3d is a flowchart of a model recognition method according to an embodiment of the present disclosure. As shown in FIG. 3d, the method may be performed by a terminal and include the following steps.

At step S310d, first information is sent to a network device, in which the first information includes meta information associated with the terminal.

In some implementations, the meta information associated with the terminal included in the first information is used by the network device to determine an AI/ML functionality supported by the terminal.

In some implementations, the meta information associated with the terminal included in the first information is used by the network device to determine an AI/ML model supported by the terminal.

Regarding the detailed description of step S310d, reference may be made to the aforementioned embodiments and will not be repeated here.

In this embodiment of the present disclosure, the terminal may send the meta information associated with the terminal to the network device, so that the network device may determine the AI/ML functionality and/or the AI/ML model supported by the terminal according to the meta information associated with the terminal.

FIG. 3e is a flowchart of a model recognition method according to an embodiment of the present disclosure. As shown in FIG. 3e, the method may be performed by a terminal and include the following steps.

At step S310e, first information is sent to a network device, in which the first information includes a second model identifier.

In some implementations, the second model identifier included in the first information is used by the network device to determine an AI/ML model supported by the terminal.

In some implementations, in addition to the second model identifier, the first information further includes meta information associated with the terminal. The meta information associated with the terminal and the second model identifier are used by the network device to determine the AI/ML model supported by the terminal.

Regarding the detailed description of step S310e, reference may be made to the aforementioned embodiments and will not be repeated here.

In this embodiment of the present disclosure, the terminal may send the second model identifier to the network device, so that the network device may determine the AI/ML model supported by the terminal according to the second model identifier.

FIG. 3f is a flowchart of a model recognition method according to an embodiment of the present disclosure. As shown in FIG. 3f, the method may be performed by a terminal and include the following steps.

At step S310f, first information is sent to a network device, in which the first information includes third functionality information and a third model identifier.

In some implementations, the third functionality information and the third model identifier included in the first information are used by the network device to determine an AI/ML model supported by the terminal.

In some implementations, in addition to the third functionality information and the third model identifier, the first information further includes meta information associated with the terminal. The meta information associated with the terminal, the third functionality information and the third model identifier are used by the network device to determine the AI/ML model supported by the terminal.

Regarding the detailed description of step S310f, reference may be made to the aforementioned embodiments and will not be repeated here.

In this embodiment of the present disclosure, the terminal may send the third functionality information and the third model identifier to the network device, so that the network device may determine the AI/ML model supported by the terminal according to the third functionality information and the third model identifier.

FIG. 4a is a flowchart of a model recognition method according to an embodiment of the present disclosure. As shown in FIG. 4a, the method may be performed by a network device and include the following steps.

At step S410a, first information sent by a terminal is received.

At step S420a, an AI/ML functionality supported by the terminal and/or an AI/ML model supported by the terminal is determined according to the first information.

In some implementations, the terminal may send the first information to the network device, so that the network device may determine the AI/ML functionality supported by the terminal and/or the AI/ML model supported by the terminal based on the first information.

In some implementations, the first information may include one or more of the following information:
first functionality information, second functionality information, third functionality information, a first model identifier, a second model identifier, a third model identifier, meta information associated with the terminal, or feature type information.

In some implementations, the first information is used by the network device to determine the AI/ML functionality supported by the terminal, the first information includes:
first functionality information, which is used to describe the AI/ML functionality supported by the terminal; or
second functionality information and a first model identifier, which are used by the network device to determine the AI/ML functionality supported by the terminal; or
a second model identifier, which is used by the network device to determine the AI/ML functionality supported by the terminal based on a preset corresponding relationship; or
meta information associated with the terminal, which is used by network devices to determine a parameter configuration of the AI/ML functionality supported by the terminal.

In some implementations, the first information is used by the network device to determine the AI/ML model supported by the terminal, the first information includes:
a second model identifier, which is used by the network device to determine the AI/ML model supported by the terminal; or
third functionality information and a third model identifier, which are used by the network device to determine the AI/ML model supported by the terminal; or
meta information associated with the terminal, which is used by network devices to determine a parameter configuration of the AI/ML model supported by the terminal.

In some implementations, the meta information associated with the terminal may include one or more of the following information:
a transmitting antenna port corresponding to the terminal, a receiving antenna port corresponding to the terminal, carrier information of the terminal, the number of subbands supported by the terminal, or location information of the terminal.

In some implementations, a value range of the second model identifier is divided according to one or more of the following information: a feature type supported by the terminal, functionality information supported by the terminal, or meta information associated with the terminal.

In some implementations, the feature type supported by the terminal includes an AI-based CSI compression feedback, the first functionality information includes one or more of the following information:
a model output payload, a channel scenario, a network configuration parameter, or a movement speed.

The feature type supported by the terminal includes an AI-based time domain CSI prediction, the first functionality information includes one or more of the following information:
a predicted time domain condition requirement, a channel scenario, a network configuration parameter, or a movement speed.

In some implementations, when the feature type supported by the terminal includes the AI-based CSI compression feedback, the second functionality information includes any one of the following information:
a model output payload, a channel scenario, a network configuration parameter, or a movement speed;
the third functionality information includes any one of the following information:
the model output payload, the channel scenario, the network configuration parameter, or the movement speed.

In some implementations, when the feature type supported by the terminal includes the AI-based time domain CSI prediction, the second functionality information includes any one of the following information:
a predicted time domain condition requirement, a channel scenario, a network configuration parameter, or a movement speed;
the third functionality information includes any one of the following information:
the predicted time domain condition requirement,, the channel scenario, the network configuration parameter, or the movement speed.

In some implementations, the feature type supported by the terminal includes the AI-based CSI compression feedback, the first model identifier includes a model ID and/or a pairing model ID, the second model identifier includes the model ID and/or the pairing model ID, and the third model identifier includes the model ID and/or the pairing model ID.

The feature type supported by the terminal includes the AI-based time domain prediction, the first model identifier includes a model ID, the second model identifier includes the model ID, and the third model identifier includes the model ID.

In the embodiment of the present disclosure, the terminal may send the first information to the network device by information reporting, so that the network device may determine the AI/ML functionality supported by the terminal and/or the AI/ML model supported by the terminal based on the first information, thereby completing recognition of the model of the terminal.

Regarding the detailed description of relevant steps or parameter definitions in the embodiments of the present disclosure, reference may be made to the above content and will not be repeated here.

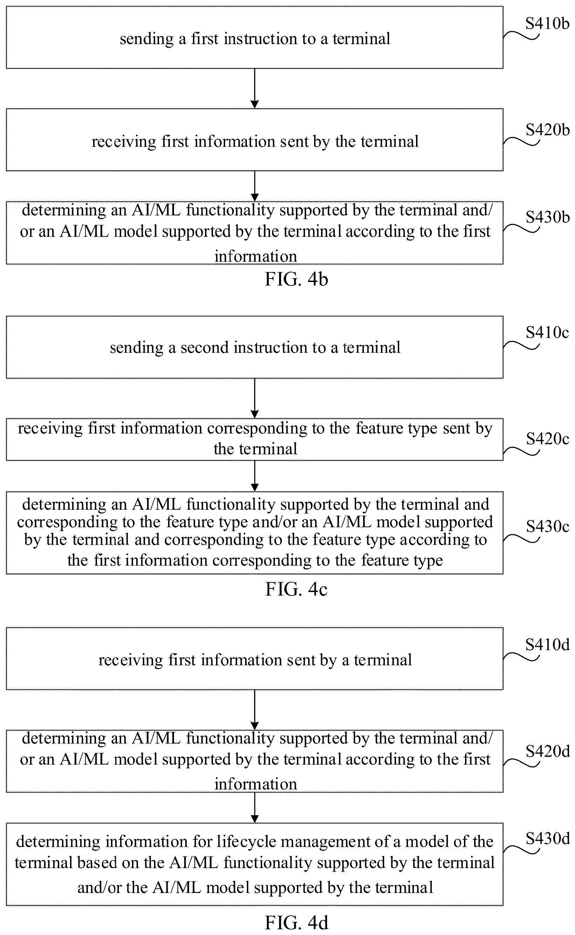

FIG. 4b is a flowchart of a model recognition method according to an embodiment of the present disclosure. As shown in FIG. 4b, the method may be performed by a network device and include the following steps.

At step S410b, a first instruction is sent to a terminal.

In some implementations, the first instruction is used to instruct the terminal to send first information.

At step S420b, first information sent by the terminal is received.

At step S430b, an AI/ML functionality supported by the terminal and/or an AI/ML model supported by the terminal is determined according to the first information.

In some implementations, the first information may include one or more of the following information:

first functionality information, second functionality information, third functionality information, a first model identifier, a second model identifier, a third model identifier, meta information associated with the terminal, or feature type information.

In some implementations, the first information is used by the network device to determine the AI/ML functionality supported by the terminal, the first information includes:
first functionality information, which is used to describe the AI/ML functionality supported by the terminal; or
second functionality information and a first model identifier, which are used by the network device to determine the AI/ML functionality supported by the terminal; or
a second model identifier, which is used by the network device to determine the AI/ML functionality supported by the terminal based on a preset corresponding relationship; or
meta information associated with the terminal, which is used by network devices to determine a parameter configuration of the AI/ML functionality supported by the terminal.

In some implementations, the first information is used by the network device to determine the AI/ML model supported by the terminal, the first information includes:
a second model identifier, which is used by the network device to determine the AI/ML model supported by the terminal; or
third functionality information and a third model identifier, which are used by the network device to determine the AI/ML model supported by the terminal; or
meta information associated with the terminal, which is used by network devices to determine a parameter configuration of the AI/ML model supported by the terminal.

In some implementations, the meta information associated with the terminal may include one or more of the following information:
a transmitting antenna port corresponding to the terminal, a receiving antenna port corresponding to the terminal, carrier information of the terminal, the number of subbands supported by the terminal, or location information of the terminal.

In some implementations, a value range of the second model identifier is divided according to one or more of the following information: a feature type supported by the terminal, functionality information supported by the terminal, or meta information associated with the terminal.

In some implementations, the feature type supported by the terminal includes an AI-based CSI compression feedback, the first functionality information includes one or more of the following information:
a model output payload, a channel scenario, a network configuration parameter, or a movement speed.

The feature type supported by the terminal includes an AI-based time domain CSI prediction, the first functionality information includes one or more of the following information:
a predicted time domain condition requirement, a channel scenario, a network configuration parameter, or a movement speed.

In some implementations, when the feature type supported by the terminal includes the AI-based CSI compression feedback, the second functionality information includes any one of the following information:
a model output payload, a channel scenario, a network configuration parameter, or a movement speed;
the third functionality information includes any one of the following information:
the model output payload, the channel scenario, the network configuration parameter, or the movement speed.

In some implementations, when the feature type supported by the terminal includes the AI-based time domain CSI prediction, the second functionality information includes any one of the following information:
a predicted time domain condition requirement, a channel scenario, a network configuration parameter, or a movement speed;
the third functionality information includes any one of the following information:
the predicted time domain condition requirement,, the channel scenario, the network configuration parameter, or the movement speed.

In some implementations, the feature type supported by the terminal includes the AI-based CSI compression feedback, the first model identifier includes a model ID and/or a pairing model ID, the second model identifier includes the model ID and/or the pairing model ID, and the third model identifier includes the model ID and/or the pairing model ID.

The feature type supported by the terminal includes the AI-based time domain prediction, the first model identifier includes a model ID, the second model identifier includes the model ID, and the third model identifier includes the model ID.

In the embodiment of the present disclosure, the terminal may send the first information to the network device, and the terminal may send the first information to the network device according to the first instruction after receiving the first instruction. That is, the embodiment of the present disclosure specify a condition or timing for the terminal to send the first instruction to the network device.

Regarding the detailed description of relevant steps or parameter definitions in the embodiments of the present disclosure, reference may be made to the above content and will not be repeated here.

FIG. 4c is a flowchart of a model recognition method according to an embodiment of the present disclosure. As shown in FIG. 4c, the method may be performed by a network device and include the following steps.

At step S410c, a second instruction is sent to a terminal.

In some implementations, the second instruction includes a feature type.

In some implementations, the second instruction is used to instruct the terminal to send first information corresponding to the feature type.

At step S420c, first information corresponding to the feature type sent by the terminal is received.

At step S430c, an AI/ML functionality supported by the terminal and corresponding to the feature type and/or an AI/ML model supported by the terminal and corresponding to the feature type is determined according to the first information corresponding to the feature type.

In some implementations, the first information may include one or more of the following information:
first functionality information, second functionality information, third functionality information, a first model identifier, a second model identifier, a third model identifier, meta information associated with the terminal, or feature type information.

In some implementations, the first information is used by the network device to determine the AI/ML functionality supported by the terminal, the first information includes:
first functionality information, which is used to describe the AI/ML functionality supported by the terminal; or
second functionality information and a first model identifier, which are used by the network device to determine the AI/ML functionality supported by the terminal; or
a second model identifier, which is used by the network device to determine the AI/ML functionality supported by the terminal based on a preset corresponding relationship; or
meta information associated with the terminal, which is used by network devices to determine a parameter configuration of the AI/ML functionality supported by the terminal.

In some implementations, the first information is used by the network device to determine the AI/ML model supported by the terminal, the first information includes:
a second model identifier, which is used by the network device to determine the AI/ML model supported by the terminal; or
third functionality information and a third model identifier, which are used by the network device to determine the AI/ML model supported by the terminal; or
meta information associated with the terminal, which is used by network devices to determine a parameter configuration of the AI/ML model supported by the terminal.

In some implementations, the meta information associated with the terminal may include one or more of the following information:
a transmitting antenna port corresponding to the terminal, a receiving antenna port corresponding to the terminal, carrier information of the terminal, the number of subbands supported by the terminal, or location information of the terminal.

In some implementations, a value range of the second model identifier is divided according to one or more of the following information: a feature type supported by the terminal, functionality information supported by the terminal, or meta information associated with the terminal.

In some implementations, the feature type supported by the terminal includes an AI-based CSI compression feedback, the first functionality information includes one or more of the following information:
a model output payload, a channel scenario, a network configuration parameter, or a movement speed.

The feature type supported by the terminal includes an AI-based time domain CSI prediction, the first functionality information includes one or more of the following information:
a predicted time domain condition requirement, a channel scenario, a network configuration parameter, or a movement speed.

In some implementations, when the feature type supported by the terminal includes the AI-based CSI compression feedback, the second functionality information includes any one of the following information:
a model output payload, a channel scenario, a network configuration parameter, or a movement speed;
the third functionality information includes any one of the following information:
   the model output payload, the channel scenario, the network configuration parameter, or the movement speed.

In some implementations, when the feature type supported by the terminal includes the AI-based time domain CSI prediction, the second functionality information includes any one of the following information:
a predicted time domain condition requirement, a channel scenario, a network configuration parameter, or a movement speed;
the third functionality information includes any one of the following information:
the predicted time domain condition requirement,, the channel scenario, the network configuration parameter, or the movement speed.

In some implementations, the feature type supported by the terminal includes the AI-based CSI compression feedback, the first model identifier includes a model ID and/or a pairing model ID, the second model identifier includes the model ID and/or the pairing model ID, and the third model identifier includes the model ID and/or the pairing model ID.

The feature type supported by the terminal includes the AI-based time domain prediction, the first model identifier includes a model ID, the second model identifier includes the model ID, and the third model identifier includes the model ID.

In the embodiment of the present disclosure, the network device may send the second instruction to the terminal, and the terminal may send the first information corresponding to the feature type to the network device according to the second instruction after receiving the second instruction. That is, the embodiment of the present disclosure may specify that, the network device may instruct the terminal to send the first information of a specified feature type, so that the network device may determine the AI/ML functionality supported by the terminal and of the specified feature type and/or the AI/ML model supported by the terminal and of the specified feature type.

Regarding the detailed description of relevant steps or parameter definitions in the embodiments of the present disclosure, reference may be made to the above content and will not be repeated here.

FIG. 4d is a flowchart of a model recognition method according to an embodiment of the present disclosure. As shown in FIG. 4d, the method may be performed by a network device and include the following steps.

At step S410d, first information sent by a terminal is received.

At step S420d, an AI/ML functionality supported by the terminal and/or an AI/ML model supported by the terminal is determined according to the first information.

At step S430d, information for lifecycle management of a model of the terminal is determined based on the AI/ML functionality supported by the terminal and/or the AI/ML model supported by the terminal.

In some implementations, the first information may include one or more of the following information:
first functionality information, second functionality information, third functionality information, a first model identifier, a second model identifier, a third model identifier, meta information associated with the terminal, or feature type information.

In some implementations, the first information is used by the network device to determine the AI/ML functionality supported by the terminal, the first information includes:
first functionality information, which is used to describe the AI/ML functionality supported by the terminal; or
second functionality information and a first model identifier, which are used by the network device to determine the AI/ML functionality supported by the terminal; or
a second model identifier, which is used by the network device to determine the AI/ML functionality supported by the terminal based on a preset corresponding relationship; or
meta information associated with the terminal, which is used by network devices to determine a parameter configuration of the AI/ML functionality supported by the terminal.

In some implementations, the first information is used by the network device to determine the AI/ML model supported by the terminal, the first information includes:
a second model identifier, which is used by the network device to determine the AI/ML model supported by the terminal; or
third functionality information and a third model identifier, which are used by the network device to determine the AI/ML model supported by the terminal; or
meta information associated with the terminal, which is used by network devices to determine a parameter configuration of the AI/ML model supported by the terminal.

In some implementations, the meta information associated with the terminal may include one or more of the following information:
a transmitting antenna port corresponding to the terminal, a receiving antenna port corresponding to the terminal, carrier information of the terminal, the number of subbands supported by the terminal, or location information of the terminal.

In some implementations, a value range of the second model identifier is divided according to one or more of the following information: a feature type supported by the terminal, functionality information supported by the terminal, or meta information associated with the terminal.

In some implementations, the feature type supported by the terminal includes an AI-based CSI compression feedback, the first functionality information includes one or more of the following information:
a model output payload, a channel scenario, a network configuration parameter, or a movement speed.

The feature type supported by the terminal includes an AI-based time domain CSI prediction, the first functionality information includes one or more of the following information:
a predicted time domain condition requirement, a channel scenario, a network configuration parameter, or a movement speed.

In some implementations, when the feature type supported by the terminal includes the AI-based CSI compression feedback, the second functionality information includes any one of the following information:
a model output payload, a channel scenario, a network configuration parameter, or a movement speed;
the third functionality information includes any one of the following information:
   the model output payload, the channel scenario, the network configuration parameter, or the movement speed.

In some implementations, when the feature type supported by the terminal includes the AI-based time domain CSI prediction, the second functionality information includes any one of the following information:
a predicted time domain condition requirement, a channel scenario, a network configuration parameter, or a movement speed;
the third functionality information includes any one of the following information:
   the predicted time domain condition requirement,, the channel scenario, the network configuration parameter, or the movement speed.

In some implementations, the feature type supported by the terminal includes the AI-based CSI compression feedback, the first model identifier includes a model ID and/or a pairing model ID, the second model identifier includes the model ID and/or the pairing model ID, and the third model identifier includes the model ID and/or the pairing model ID.

The feature type supported by the terminal includes the AI-based time domain prediction, the first model identifier includes a model ID, the second model identifier includes the model ID, and the third model identifier includes the model ID.

In the embodiment of the present disclosure, the terminal may send the first information to the network device by information reporting, so that the network device may determine the AI/ML functionality supported by the terminal and/or the AI/ML model supported by the terminal based on the first information and further implement the lifecycle management of the model of the terminal according to the AI/ML functionality supported by the terminal and/or the AI/ML model supported by the terminal.

Regarding the detailed description of relevant steps or parameter definitions in the embodiments of the present disclosure, reference may be made to the above content and will not be repeated here.

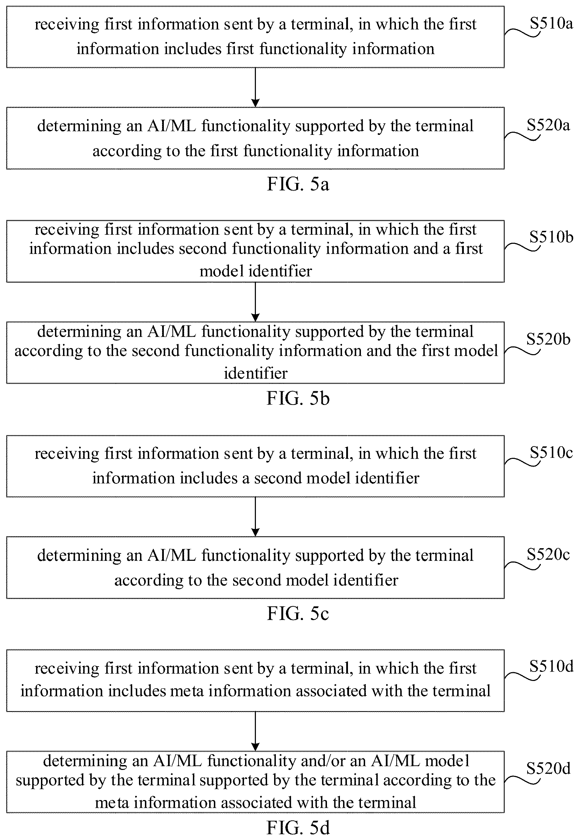

FIG. 5a is a flowchart of a model recognition method according to an embodiment of the present disclosure. As shown in FIG. 5a, the method may be performed by a network device and include the following steps.

At step S510a, first information sent by a terminal is received, in which the first information includes first functionality information.

At step S520a, an AI/ML functionality supported by the terminal is determined according to the first functionality information.

In some implementations, in addition to the first functionality information, the first information further includes meta information associated with the terminal, so that the network device may determine the AI/ML functionality supported by the terminal according to the meta information associated with the terminal and the first functionality information.

Regarding the detailed description of steps S510a and S520a, reference may be made to the aforementioned embodiments and will not be repeated here.

In this embodiment of the present disclosure, the terminal may send the first functionality information to the network device, so that the network device may determine the AI/ML functionality supported by the terminal according to the first functionality information.

FIG. 5b is a flowchart of a model recognition method according to an embodiment of the present disclosure. As shown in FIG. 5b, the method may be performed by a network device and include the following steps.

At step S510b, first information sent by a terminal is received, in which the first information includes second functionality information and a first model identifier.

At step S520b, an AI/ML functionality supported by the terminal is determined according to the second functionality information and the first model identifier.

In some implementations, in addition to the second functionality information and the first model identifier, the first information further includes meta information associated with the terminal, so that the network device may determine the AI/ML functionality supported by the terminal according to the meta information associated with the terminal, the second functionality information and the first model identifier.

Regarding the detailed description of steps S510b and S520b, reference may be made to the aforementioned embodiments and will not be repeated here.

In this embodiment of the present disclosure, the terminal may send the second functionality information and the first model identifier to the network device, so that the network device may determine the AI/ML functionality supported by the terminal according to the second functionality information and the first model identifier.

FIG. 5c is a flowchart of a model recognition method according to an embodiment of the present disclosure. As shown in FIG. 5c, the method may be performed by a network device and include the following steps.

At step S510c, first information sent by a terminal is received, in which the first information includes a second model identifier.

At step S520c, an AI/ML functionality supported by the terminal is determined according to the second model identifier.

In some implementations, in addition to the second model identifier, the first information further includes meta information associated with the terminal, so that the network device may determine the AI/ML functionality supported by the terminal according to the meta information associated with the terminal and the second model identifier.

Regarding the detailed description of steps S510c and S520c, reference may be made to the aforementioned embodiments and will not be repeated here.

In this embodiment of the present disclosure, the terminal may send the second model identifier to the network device, so that the network device may determine the AI/ML functionality supported by the terminal according to the second model identifier.

FIG. 5d is a flowchart of a model recognition method according to an embodiment of the present disclosure. As shown in FIG. 5d, the method may be performed by a network device and include the following steps.

At step S510d, first information sent by a terminal is received, in which the first information includes meta information associated with the terminal.

At step S520d, an AI/ML functionality supported by the terminal and/or an AI/ML model supported by the terminal is determined according to the meta information associated with the terminal.

Regarding the detailed description of steps S510d and S520d, reference may be made to the aforementioned embodiments and will not be repeated here.

In this embodiment of the present disclosure, the terminal may send the meta information associated with the terminal to the network device, so that the network device may determine the AI/ML functionality and/or the AI/ML model supported by the terminal according to the meta information associated with the terminal.

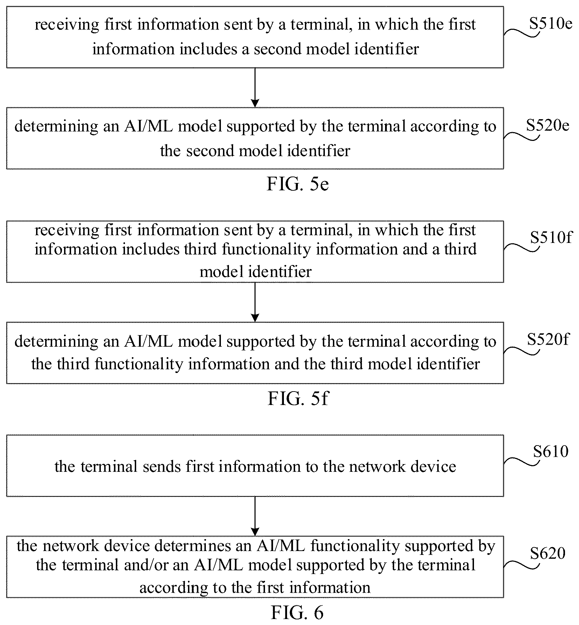

FIG. 5e is a flowchart of a model recognition method according to an embodiment of the present disclosure. As shown in FIG. 5e, the method may be performed by a network device and include the following steps.

At step S510e, first information sent by a terminal is received, in which the first information includes a second model identifier.

At step S520e, an AI/ML model supported by the terminal is determined according to the second model identifier.

In some implementations, in addition to the second model identifier, the first information further includes meta information associated with the terminal, so that the network device may determine the AI/ML model supported by the terminal according to the meta information associated with the terminal and the second model identifier.

Regarding the detailed description of steps S510e and S520e, reference may be made to the aforementioned embodiments and will not be repeated here.

In this embodiment of the present disclosure, the terminal may send the second model identifier to the network device, so that the network device may determine the AI/ML model supported by the terminal according to the second model identifier.

FIG. 5f is a flowchart of a model recognition method according to an embodiment of the present disclosure. As shown in FIG. 5f, the method may be performed by a network device and include the following steps.

At step S510f, first information sent by a terminal is received, in which the first information includes third functionality information and a third model identifier.

At step S520f, an AI/ML model supported by the terminal is determined according to the third functionality information and the third model identifier.

In some implementations, in addition to the third functionality information and the third model identifier, the first information further includes meta information associated with the terminal, so that the network device may determine the AI/ML model supported by the terminal according to the meta information associated with the terminal, the third functionality information and the third model identifier.

Regarding the detailed description of steps S510f and S520f, reference may be made to the aforementioned embodiments and will not be repeated here.

In this embodiment of the present disclosure, the terminal may send the third functionality information and the third model identifier to the network device, so that the network device may determine the AI/ML model supported by the terminal according to the third functionality information and the third model identifier.

FIG. 6 is a flowchart of a model recognition method according to an embodiment of the present disclosure. As shown in FIG. 6, the method may be performed by a communication system including a terminal and a network device and include the following steps.

At step S610, the terminal sends first information to the network device.

At step S620, the network device determines an AI/ML functionality supported by the terminal and/or an AI/ML model supported by the terminal according to the first information.

Regarding the detailed description of steps S610 and S620, reference may be made to the aforementioned embodiments and will not be repeated here.

The following is another embodiment provided by the present disclosure.

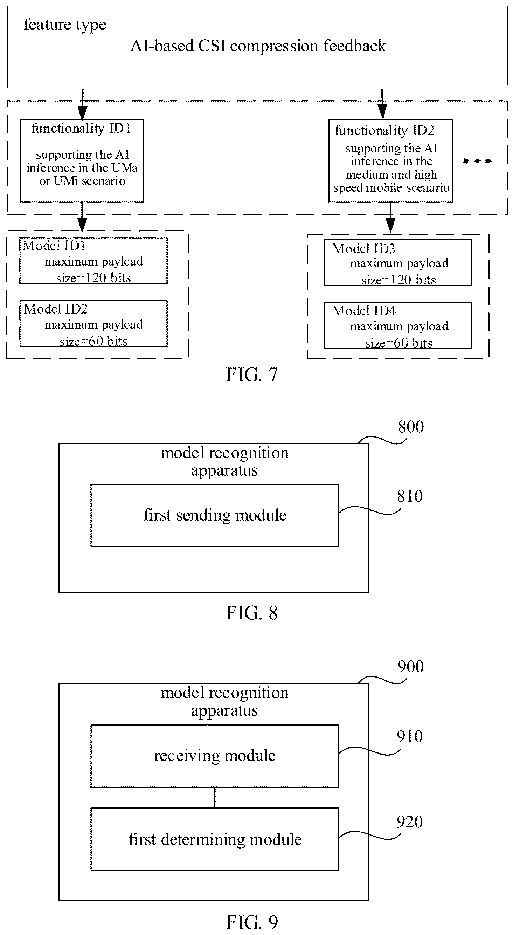

A base station requires UE to report an AI/ML functionality supported by an AI-based CSI compression feedback. Therefore, the base station sends a UE capability query instruction to the UE, such as a UECapabilityEnquiry, to query which functionalities the UE supports and/or which AI/ML functionalities the UE supports. After receiving the query instruction, the UE reports UEcapabilityInformation to the base station, indicating which AI/ML functionalities the UE supports, and the UE may also indicate to the base station a model ID contained in the functionality. For example, the AI-based CSI compression feedback corresponding to the UE is used as a feature type of the UE. In the capability report, the UE indicates that a functionality of supporting the AI-based CSI compression feedback in the UMa or UMi scenario, in addition, a functionality of supporting the AI-based CSI compression feedback in the medium and high speed mobile scenario. These two functionalities are defined as AI functionality ID1 and AI functionality ID2, respectively. In addition, the functionality of supporting the CSI compression feedback in the UMa or UMi scenario includes an AI/ML model that can support inference for the maximum payload size of 120 bits after quantization of the maximum compressed information and an AI/ML model that can support inference for the maximum payload size of 60 bits after quantization of the maximum compressed information, and the IDs of the two models are defined as model ID 1 and model ID 2. Correspondingly, the functionality of supporting the AI-based CSI compression feedback in the high-speed mobile scenarios also includes two AI/ML models that can support inference for the maximum payload size of 120 bits and the maximum payload size of 60 bits after quantization of the maximum compressed information. It is assumed and defined that the IDs of the two models are defined as model ID 3 and model ID 4. As shown in FIG. 7, the base station may determine the AI/ML functionality supported by the UE based on the supported AI/ML functionality and the AI/ML model ID reported by the UE.

In some implementations, after determining the AI/ML functionalities supported by the UE, the base station activates a model ID under one of the functionalities through RRC signaling according to a current environment or application condition of the UE. Alternatively, one of the functionalities is first activated through RRC signaling, and then an AI/ML model ID under the functionality is activated through other signaling such as MAC-CE or DCI.

The following is another embodiment provided by the present disclosure.

The base station sends a UE capability query instruction to the UE, such as the UECapabilityEnquiry, to directly query which AI/ML models the UE supports. Each model is associated with one mode ID. The model ID is also associated with a functionality. Assume that it is determined that each model ID is associated with a functionality in a predefined manner. In this case, the UE does not need to report the functionality, but only reports the supported model ID. For example, the UE only reports model ID1 and model ID4 through capability reporting, and as shown in FIG. 7, the predefined configuration has been used to explain that model ID1 and model ID4 correspond to an AI inference of supporting the maximum payload size of 120 bits in the UMa/UMi scenario and an AI inference of supporting the maximum payload size of 60 bits in the medium and high speed mobile scenario. The base station knows which specific AI inference the UE supports through the model ID reported by the UE, combined with the predefined configuration, so that the UE can be given appropriate parameter configuration for the AI inference.

The following is another embodiment provided by the present disclosure.

The base station requires the UE to report the AI/ML functionalities supported by the AI-based time domain CSI prediction. The base station sends a UE capability query instruction to the UE, such as the UECapabilityEnquiry, to query which AI/ML functionalities the UE supports. After receiving the query instruction, the UE reports UEcapabilityInformation to the base station, indicating which AI/ML functionalities the UE supports. For example, the UE reports AI/ML functionality 1 and AI/ML functionality 2. Assume that AI/ML functionality 1 is defined as the UE can predict channel information on a maximum of 10 slots with the interval between adjacent slots being 2 and can be used for inference below 30Km/h; AI/ML functionality 2 is defined as the UE can achieve inference about 60Km/h and below and can predict channel information on a maximum of 20 slots with the interval between adjacent slots being 5. Thus, the base station may determine the AI/ML functionalities supported by the UE based on the supported AI/ML functionalities reported by the UE.

In some implementations, the base station indicates which AI/ML functionality to activate through information based on the UE's movement speed and the requirement for time domain CSI prediction. Assume that the current UE speed is 15Km/h, and it is required to perform prediction on 5slots with the number of adjacent time slots being 2. The base station can directly display and instruct the UE to activate AI/ML functionality 1 through RRC signaling. The RRC information used by the base station to configure the number of CSI-RS resources or the interval between adjacent time slots of 2slots to the UE, implicitly instructing the UE to activate AI/ML functionality 1.

It should be noted that, among the multiple embodiments or features separated by "or", even if some of the features are not achievable, they will not affect other solutions. In addition, in the absence of contradiction, the embodiments of the present disclosure can be combined with other embodiments or implementations and various optional solutions involved in the model recognition method, which will not be described in detail here.

FIG. 8 is a block diagram of a model recognition apparatus 800 according to some embodiments. Referring to FIG. 8, the model recognition apparatus 800 is applied to a terminal, and the model recognition apparatus 800 may include a first sending module 810.

The first sending module 810 is configured to send first information to a network device, in which the first information is used by the network device to determine an artificial intelligence/machine learning (AI/ML) functionality supported by the terminal and/or an AI/ML model supported by the terminal.

In some implementations, the first sending module 810 includes:
a first receiving submodule, configured to receive a first instruction sent by the network device; and
a first sending submodule, configured to send, according to the first instruction, the first information to the network device.

In some implementations, the first sending module 810 includes:
a second receiving submodule, configured to receive a second instruction sent by the network device, in which the second instruction includes a feature type; and
a second sending submodule, configured to send, according to the second instruction, first information corresponding to the feature type to the network device, in which the first information corresponding to the feature type is used to determine an AI/ML functionality supported by the terminal and corresponding to the feature type and/or an AI/ML model supported by the terminal and corresponding to the feature type.

In some implementations, the first information is used by the network device to determine the AI/ML functionality supported by the terminal, and the first information includes:
first functionality information for describing the AI/ML functionality supported by the terminal; or
second functionality information and a first model identifier, in which the second functionality information and the first model identifier are used by the network device to determine the AI/ML functionality supported by the terminal; or
a second model identifier, in which the second model identifier is used by the network device to determine the AI/ML functionality supported by the terminal based on a preset corresponding relationship; or
meta information associated with the terminal, in which the meta information is used by the network device to determine a parameter configuration of the AI/ML functionality supported by the terminal.

In some implementations, the first information is used by the network device to determine the AI/ML model supported by the terminal, and the first information includes:
a second model identifier, in which the second model identifier is used by the network device to determine the AI/ML model supported by the terminal; or
third functionality information and a third model identifier, in which the third functionality information and the third model identifier are used by the network device to determine the AI/ML model supported by the terminal; or
meta information associated with the terminal, in which the meta information is used by the network device to determine a parameter configuration of the AI/ML model supported by the terminal.

In some implementations, the meta information includes one or more of:
a transmitting antenna port corresponding to the terminal, a receiving antenna port corresponding to the terminal, carrier information of the terminal, a number of subbands supported by the terminal, or location information of the terminal.

In some implementations, a value range of the second model identifier is divided according to one or more of: a feature type supported by the terminal, functionality information supported by the terminal, and the meta information associated with the terminal.

In some implementations, in a case where a feature type supported by the terminal includes an AI-based channel state information (CSI) compression feedback, the first functionality information includes one or more of:
a model output payload, a channel scenario, a network configuration parameter, or a movement speed;
in a case where the feature type supported by the terminal includes an AI-based time domain CSI prediction, the first functionality information includes one or more of:
a predicted time domain condition requirement, a channel scenario, a network configuration parameter, or a movement speed.

In some implementations, in a case where a feature type supported by the terminal includes an AI-based CSI compression feedback, the second functionality information includes any of:
a model output payload, a channel scenario, a network configuration parameter, or a movement speed,
and the third functionality information includes any of:
the model output payload, the channel scenario, the network configuration parameter, or the movement speed;
in a case where the feature type supported by the terminal includes an AI-based time domain CSI prediction, the second functionality information includes any of:
a predicted time domain condition requirement, a channel scenario, a network configuration parameter, or a movement speed,
and the third functionality information includes any of:
the predicted time domain condition requirement, the channel scenario, the network configuration parameter, or the movement speed.

In some implementations, in a case where a feature type supported by the terminal includes an AI-based CSI compression feedback, the first model identifier includes a model identity document (ID) and/or a paring model ID, the second model identifier includes the model ID and/or the paring model ID, and the third model identifier includes the model ID and/or the paring model ID;
in a case where the feature type supported by the terminal includes an AI-based time domain prediction, the first model identifier includes a model ID, the second model identifier includes the model ID, and the third model identifier includes the model ID.

FIG. 9 is a block diagram of a model recognition apparatus 900 according to some embodiments. Referring to FIG. 9, the model recognition apparatus 900 is applied to a network device, and the model recognition apparatus 800 may include a receiving module 910 and a first determining module 920.

The receiving module 910 is configured to receive first information sent by a terminal.

The first determining module 920 is configured to determine, according to the first information, an artificial intelligence/machine learning (AI/ML) functionality supported by the terminal and/or an AI/ML model supported by the terminal.

In some implementations, the apparatus 900 further includes:
a second sending module, configured to send a first instruction to the terminal, in which the first instruction is used by the terminal to send the first information.

In some implementations, the apparatus 900 further includes:
a third sending module, configured to send a second instruction to the terminal, in which the second instruction includes a feature type, the second instruction is used by the terminal to send first information corresponding to the feature type.

Correspondingly, the receiving module 910 is further configured to receive the first information corresponding to the feature type sent by the terminal.

In some implementations, the apparatus 900 further includes:
a second determining module, configured to determine, according to the AI/ML functionality supported by the terminal and/or the AI/ML model supported by the terminal, information for lifecycle management of a model on the terminal.

In some implementations, the first information is used by the network device to determine the AI/ML functionality supported by the terminal, and the first information includes:
first functionality information for describing the AI/ML functionality supported by the terminal; or
second functionality information and a first model identifier, in which the second functionality information and the first model identifier are used by the network device to determine the AI/ML functionality supported by the terminal; or
a second model identifier, in which the second model identifier is used by the network device to determine the AI/ML functionality supported by the terminal based on a preset corresponding relationship; or
meta information associated with the terminal, in which the meta information is used by the network device to determine a parameter configuration of the AI/ML functionality supported by the terminal.

In some implementations, the first information is used by the network device to determine the AI/ML model supported by the terminal, and the first information includes:
a second model identifier, in which the second model identifier is used by the network device to determine the AI/ML model supported by the terminal; or
third functionality information and a third model identifier, in which the third functionality information and the third model identifier are used by the network device to determine the AI/ML model supported by the terminal; or
meta information associated with the terminal, in which the meta information is used by the network device to determine a parameter configuration of the AI/ML model supported by the terminal.

In some implementations, the meta information includes one or more of:
a transmitting antenna port corresponding to the terminal, a receiving antenna port corresponding to the terminal, carrier information of the terminal, a number of subbands supported by the terminal, or location information of the terminal.

In some implementations, a value range of the second model identifier is divided according to one or more of: a feature type supported by the terminal, functionality information supported by the terminal, and the meta information associated with the terminal.

In some implementations, in a case where a feature type supported by the terminal includes an AI-based channel state information (CSI) compression feedback, the first functionality information includes one or more of:
a model output payload, a channel scenario, a network configuration parameter, or a movement speed;
in a case where the feature type supported by the terminal includes an AI-based time domain CSI prediction, the first functionality information includes one or more of:
a predicted time domain condition requirement, a channel scenario, a network configuration parameter, or a movement speed.

In some implementations, in a case where a feature type supported by the terminal includes an AI-based CSI compression feedback, the second functionality information includes any of:
a model output payload, a channel scenario, a network configuration parameter, or a movement speed,
and the third functionality information includes any of:
the model output payload, the channel scenario, the network configuration parameter, or the movement speed;
in a case where the feature type supported by the terminal includes an AI-based time domain CSI prediction, the second functionality information includes any of:
a predicted time domain condition requirement, a channel scenario, a network configuration parameter, or a movement speed,
and the third functionality information includes any of:
the predicted time domain condition requirement, the channel scenario, the network configuration parameter, or the movement speed.

In some implementations, in a case where a feature type supported by the terminal includes an AI-based CSI compression feedback, the first model identifier includes a model identity document (ID) and/or a paring model ID, the second model identifier includes the model ID and/or the paring model ID, and the third model identifier includes the model ID and/or the paring model ID;
in a case where the feature type supported by the terminal includes an AI-based time domain prediction, the first model identifier includes a model ID, the second model identifier includes the model ID, and the third model identifier includes the model ID.

Regarding the apparatuses in the above embodiment, the specific manner in which each module performs operations has been described in detail in the embodiments of the method, and will not be elaborated here.

The present disclosure also provides a computer-readable storage medium having computer program instructions stored thereon, and when the program instructions are executed by a processor, the steps of the model recognition method provided by the present disclosure are implemented.

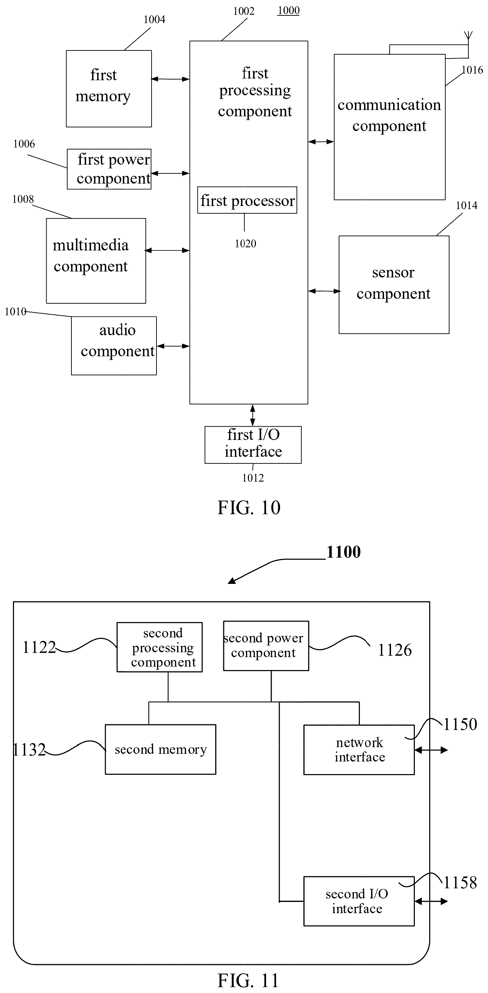

FIG. 10 is a block diagram of a terminal according to an embodiment of the disclosure. For example, the terminal 1000 can be a mobile phone, computer, digital broadcast user device, message transceiver, game console, tablet device, medical device, fitness device, personal digital assistant, smart car, etc.

Referring to FIG. 10, the terminal 1000 may include at least one of the following components: a first processing component 1002, a first memory 1004, a first power component 1006, a multimedia component 1008, an audio component 1010, a first input/output (I/O) interface 1012, a sensor component 1014, and a communication component 1016.

The first processing component 1002 typically controls the overall operation of the terminal 1000, such as those associated with display, telephone calls, data communication, camera operation, and recording operations. The first processing component 1002 may include one or more first processors 1020 to execute instructions to complete all or part of the blocks of the method described above. In addition, the first processing component 1002 may include one or more modules to facilitate the processing of interactions between the first processing component 1002 and other components. For example, the first processing component 1002 may include a multimedia module to facilitate the interaction between the multimedia component 1008 and the first processing component 1002.

The first memory 1004 is configured to store various types of data to support operations in the terminal 1000. Examples of such data include instructions for any application or method used to operate on the terminal 1000, contact data, phone book data, messages, pictures, videos, etc. The first memory 1004 can be implemented by any type of volatile or non-volatile memory or a combination of them, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or CD.

The first power component 1006 provides power to the various components of the terminal 1000. The first power component 1006 may include a power management system, at least one power supply, and other components associated with generating, managing, and distributing power for the terminal 1000.

The multimedia component 1008 includes a screen providing an output interface between the terminal 1000 and the user. In some embodiments, the screen may include a liquid crystal display (LCD) and a touch panel (TP). If the screen includes a touch panel, the screen can be implemented as a touch screen to receive input signals from the user. The touch panel includes at least one touch sensor to sense touch, swiping, and gestures on the touch panel. The touch sensor can not only sense the boundaries of the touch or slide action, but also detect the wake time and pressure associated with the touch or slide operation. In some embodiments, the multimedia component 1008 includes a front camera and/or a rear camera. When the terminal 1000 is in operation mode, such as shooting mode or video mode, the front camera and/or rear camera can receive external multimedia data. Each front camera and rear camera can be a fixed optical lens system or have focal length and optical zoom capabilities.

The audio component 1010 is configured to output and/or input audio signals. For example, the audio component 1010 includes a microphone (MIC) that is configured to receive external audio signals when the terminal 1000 is in operational mode, such as call mode, recording mode, and speech recognition mode. The received audio signal may be further stored in the first memory 1004 or transmitted via a communication component 1016. In some embodiments, the audio component 1010 also includes a loudspeaker for outputting an audio signal.

The first I/O interface 1012 provides an interface between the first processing component 1002 and the peripheral interface module, which can be a keyboard, a click wheel, a button, etc. The button may include, but are not limited to: a home button, a volume button, a start button, and a lock button.

The sensor component 1014 includes at least one sensor to provide a condition assessment of all aspects of the terminal 1000. For example, the sensor component 1014 can detect the on/off state of the terminal 1000, the relative positioning of the components, such as the display and keypad of the terminal 1000, the sensor component 1014 can also detect changes in the position of the terminal 1000 or one of the components of the terminal 1000, the presence or absence of contact between the user and the terminal 1000, position or acceleration/deceleration of the terminal 1000 and temperature change of the terminal 1000. The sensor component 1014 may include a proximity sensor configured to detect the presence of nearby objects in the absence of any physical contact. The sensor component 1014 may also include an optical sensor, such as a CMOS or CCD image sensor, for use in imaging applications. In some embodiments, the sensor component 1014 may also include an acceleration sensor, a gyroscope sensor, a magnetic sensor, a pressure sensor, or a temperature sensor.

The communication component 1016 is configured to facilitate wired or wireless communication between the terminal 1000 and other devices. The terminal 1000 can access wireless networks based on communication standards, such as WiFi, 2G or 3G, or a combination of them. In one exemplary embodiment, the communication component 1016 receives broadcast signals or broadcast-related information from an external broadcast management system via a broadcast channel. In an exemplary embodiment, the communication component 1016 also includes a near-field communication (NFC) module to facilitate short-range communication. For example, the NFC module can be implemented based on radio frequency identification (RFID) technology, infrared data association (IrDA) technology, ultra-wideband (UWB) technology, bluetooth (BT) technology and other technologies.

In an exemplary embodiment, the terminal 1000 can be used to perform any of the above methods of the UE by implementing by at least one application specific integrated circuit (ASIC), digital signal processor (DSP), digital signal processing device (DSPD), programmable logic device (PLD), field programmable gate array (FPGA), controller, microcontroller, microprocessor, or other electronic components.

In an embodiment, a non-transitory computer-readable storage medium including instructions is also provided, such as the first memory 1004 including instructions, and the instructions may be executed by the first processor 1020 of the terminal 1000 to generate the above method. For example, the non-transitory computer-readable storage medium may be a ROM, a random access memory (RAM), a CD-ROM, a magnetic tape, a floppy disk, an optical data storage device, etc.

In addition to being an independent electronic device, the above-mentioned apparatus can also be a part of an independent electronic device. For example, in an embodiment, the apparatus can be an integrated circuit (IC) or a chip, in which the integrated circuit can be an IC or a collection of multiple ICs; the chip can include but is not limited to the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC, or system-level chip), etc. The above-mentioned integrated circuit or chip can be used to execute executable instructions (or codes) to implement the above-mentioned model recognition method. The executable instructions can be stored in the integrated circuit or chip, or can be obtained from other apparatuses or devices, such as the integrated circuit or chip includes a processor, a memory, and an interface for communicating with other apparatuses. The executable instruction may be stored in the memory, and when the executable instruction is executed by the processor, the above-mentioned model recognition method is implemented; alternatively, the integrated circuit or chip may receive the executable instruction through the interface and transmit it to the processor for execution, so as to implement the above-mentioned model recognition method.

In another embodiment, a computer program product is also provided. The computer program product includes a computer program executable by a programmable apparatus. The computer program has a code portion for executing the above-mentioned model recognition method when executed by the programmable apparatus.

FIG. 11 is a block diagram of a network device according to an embodiment of the disclosure. For example, the network device 1100 may be provided as other network logic entities in a core network or an access network. Referring to FIG. 11, the network device 1100 includes a processing component 1122, which further includes one or more processors, and memory resources represented by a memory 1132 for storing instructions, such as applications, that can be executed by the processing component 1122. The applications stored in memory 1132 may include one or more modules in which each corresponds to a set of instructions. In addition, the processing component 1122 is configured to execute instructions to implement steps the communication method provided in the above method embodiments.

The network device 1100 may also include a power supply component 1126 configured to perform power management of the network device 1100, a wired or wireless network interface 1150 configured to connect the network device 1100 to the network, and an input/output (I/O) interface 1158. The network device 1100 can operate operating systems based on storage in the memory 1132, such as Windows Server ^{™}, Mac OS X^{™}, Unix ^{™}, Linux ^{™}, Free BSDT^{M} and so on.

Those skilled in the art, after considering the specification and practicing the invention disclosed herein, will readily think of other embodiments of the disclosure. This disclosure is intended to cover any variation, use, or adaptation of the invention that follows the general principles of the invention and includes common knowledge or conventional technical means in the field of technology that are not disclosed in this disclosure. The specification and embodiments are considered as examples, and the true scope and spirit of this disclosure are indicated by the claims below

It should be understood that this disclosure is not limited to the precise structure already described above and illustrated in the attached drawings, and that various modifications and changes can be made without departing from its scope. The scope of this disclosure is limited only by the attached claims.

## Claims

1. A model recognition method, performed by a terminal, comprising:
sending first information to a network device, wherein the first information is used by the network device to determine an artificial intelligence/machine learning (AI/ML) functionality supported by the terminal and/or an AI/ML model supported by the terminal.

2. The method of claim 1, wherein sending the first information to the network device comprises:
receiving a first instruction sent by the network device; and
sending, according to the first instruction, the first information to the network device.

3. The method of claim 1, wherein sending the first information to the network device comprises:
receiving a second instruction sent by the network device, wherein the second instruction comprises a feature type; and
sending, according to the second instruction, first information corresponding to the feature type to the network device, wherein the first information corresponding to the feature type is used to determine an AI/ML functionality supported by the terminal and corresponding to the feature type and/or an AI/ML model supported by the terminal and corresponding to the feature type.

4. The method of any of claims 1-3, wherein the first information is used by the network device to determine the AI/ML functionality supported by the terminal, and the first information comprises:
first functionality information for describing the AI/ML functionality supported by the terminal; or
second functionality information and a first model identifier, wherein the second functionality information and the first model identifier are used by the network device to determine the AI/ML functionality supported by the terminal; or
a second model identifier, wherein the second model identifier is used by the network device to determine the AI/ML functionality supported by the terminal based on a preset corresponding relationship; or
meta information associated with the terminal, wherein the meta information is used by the network device to determine a parameter configuration of the AI/ML functionality supported by the terminal.

5. The method of any of claims 1-3, wherein the first information is used by the network device to determine the AI/ML model supported by the terminal, and the first information comprises:
a second model identifier, wherein the second model identifier is used by the network device to determine the AI/ML model supported by the terminal; or
third functionality information and a third model identifier, wherein the third functionality information and the third model identifier are used by the network device to determine the AI/ML model supported by the terminal; or
meta information associated with the terminal, wherein the meta information is used by the network device to determine a parameter configuration of the AI/ML model supported by the terminal.

6. The method of claim 4 or 5, wherein the meta information comprises one or more of:
a transmitting antenna port corresponding to the terminal, a receiving antenna port corresponding to the terminal, carrier information of the terminal, a number of subbands supported by the terminal, or location information of the terminal.

7. The method of claim 4 or 5, wherein a value range of the second model identifier is divided according to one or more of: a feature type supported by the terminal, functionality information supported by the terminal, and the meta information associated with the terminal.

8. The method of claim 4, wherein
in accordance with a feature type supported by the terminal comprising an AI-based channel state information (CSI) compression feedback, the first functionality information comprises one or more of: a model output payload, a channel scenario, a network configuration parameter, or a speed of movement;
in accordance with the feature type supported by the terminal comprising an AI-based time domain CSI prediction, the first functionality information comprises one or more of: a predicted time domain condition requirement, a channel scenario, a network configuration parameter, or a speed of movement.

9. The method of claim 4 or 5, wherein
in accordance with a feature type supported by the terminal comprising an AI-based CSI compression feedback, the second functionality information comprises any of: a model output payload, a channel scenario, a network configuration parameter, or a speed of movement, and the third functionality information comprises any of: the model output payload, the channel scenario, the network configuration parameter, or the speed of movement;
in accordance with the feature type supported by the terminal comprising an AI-based time domain CSI prediction, the second functionality information comprises any of: a predicted time domain condition requirement, a channel scenario, a network configuration parameter, or a speed of movement, and the third functionality information comprises any of: the predicted time domain condition requirement, the channel scenario, the network configuration parameter, or the speed of movement.

10. The method of claim 4 or 5, wherein
in accordance with a feature type supported by the terminal comprising an AI-based CSI compression feedback, the first model identifier comprises a model identity document (ID) and/or a paring model ID, the second model identifier comprises the model ID and/or the paring model ID, and the third model identifier comprises the model ID and/or the paring model ID;
in accordance with the feature type supported by the terminal comprising an AI-based time domain prediction, the first model identifier comprises a model ID, the second model identifier comprises the model ID, and the third model identifier comprises the model ID.

11. A model recognition method, performed by a network device, comprising:
receiving first information sent by a terminal;
determining, according to the first information, an artificial intelligence/machine learning (AI/ML) functionality supported by the terminal and/or an AI/ML model supported by the terminal.

12. The method of claim 11, further comprising:
sending a first instruction to the terminal, wherein the first instruction is used by the terminal to send the first information.

13. The method of claim 11, further comprising:
sending a second instruction to the terminal, wherein the second instruction comprises a feature type, the second instruction is used by the terminal to send first information corresponding to the feature type;
wherein receiving the first information sent by the terminal comprises:
receiving the first information corresponding to the feature type sent by the terminal.

14. The method of any of claims 11-13, further comprising:
determining, according to at least one of the AI/ML functionality supported by the terminal or the AI/ML model supported by the terminal, information for lifecycle management of a model on the terminal.

15. The method of any of claims 11-14, wherein the first information is used by the network device to determine the AI/ML functionality supported by the terminal, and the first information comprises:
first functionality information for describing the AI/ML functionality supported by the terminal; or
second functionality information and a first model identifier, wherein the second functionality information and the first model identifier are used by the network device to determine the AI/ML functionality supported by the terminal; or
a second model identifier, wherein the second model identifier is used by the network device to determine the AI/ML functionality supported by the terminal based on a preset corresponding relationship; or
meta information associated with the terminal, wherein the meta information is used by the network device to determine a parameter configuration of the AI/ML functionality supported by the terminal.

16. The method of any of claims 11-14, wherein the first information is used by the network device to determine the AI/ML model supported by the terminal, and the first information comprises:
a second model identifier, wherein the second model identifier is used by the network device to determine the AI/ML model supported by the terminal; or
third functionality information and a third model identifier, wherein the third functionality information and the third model identifier are used by the network device to determine the AI/ML model supported by the terminal; or
meta information associated with the terminal, wherein the meta information is used by the network device to determine a parameter configuration of the AI/ML model supported by the terminal.

17. The method of claim 15 or 16, wherein the meta information comprises one or more of:
a transmitting antenna port corresponding to the terminal, a receiving antenna port corresponding to the terminal, carrier information of the terminal, a number of subbands supported by the terminal, or location information of the terminal.

18. The method of claim 15 or 16, wherein a value range of the second model identifier is divided according to one or more of: a feature type supported by the terminal, functionality information supported by the terminal, and the meta information associated with the terminal.

19. The method of claim 15, wherein
in accordance with a feature type supported by the terminal comprising an AI-based channel state information (CSI) compression feedback, the first functionality information comprises one or more of: a model output payload, a channel scenario, a network configuration parameter, or a speed of movement;
in accordance with the feature type supported by the terminal comprising an AI-based time domain CSI prediction, the first functionality information comprises one or more of: a predicted time domain condition requirement, a channel scenario, a network configuration parameter, or a speed of movement.

20. The method of claim 15 or 16, wherein
in accordance with a feature type supported by the terminal comprising an AI-based CSI compression feedback, the second functionality information comprises any of: a model output payload, a channel scenario, a network configuration parameter, or a speed of movement, and the third functionality information comprises any of: the model output payload, the channel scenario, the network configuration parameter, or the speed of movement;
in accordance with the feature type supported by the terminal comprising an AI-based time domain CSI prediction, the second functionality information comprises any of: a predicted time domain condition requirement, a channel scenario, a network configuration parameter, or a speed of movement, and the third functionality information comprises any of: the predicted time domain condition requirement, the channel scenario, the network configuration parameter, or the speed of movement.

21. The method of claim 15 or 16, wherein
in accordance with a feature type supported by the terminal comprises an AI-based CSI compression feedback, the first model identifier comprises a model identity document (ID) and/or a paring model ID, the second model identifier comprises the model ID and/or the paring model ID, and the third model identifier comprises the model ID and/or the paring model ID;
in accordance with the feature type supported by the terminal comprises an AI-based time domain prediction, the first model identifier comprises a model ID, the second model identifier comprises the model ID, and the third model identifier comprises the model ID.

22. A model management method, performed by a communication system comprising a terminal and a network device, comprising:
sending, by the terminal, first information to the network device; and
determining, by the network device according to the first information, an artificial intelligence/machine learning (AI/ML) functionality supported by the terminal and/or an AI/ML model supported by the terminal.

23. A model recognition apparatus, comprising:
a first sending module, configured to send first information to a network device, wherein the first information is used by the network device to determine an artificial intelligence/machine learning (AI/ML) functionality supported by the terminal and/or an AI/ML model supported by the terminal.

24. A model recognition apparatus, comprising:
a receiving module, configured to receive first information sent by a terminal;
a first determining module, configured to determine, according to the first information, an artificial intelligence/machine learning (AI/ML) functionality supported by the terminal and/or an AI/ML model supported by the terminal.

25. A communication device, comprising:
one or more processors;
wherein the processor is configured to call compute instructions to cause the communication device to perform the method of any one of claims 1 to 21.

26. A communication system, comprising: a terminal and a network device, wherein the terminal is configured to perform the method of any one of claims 1 to 10 and the network device is configured to perform the method of any one of claims 11 to 21.

27. A computer-readable storage medium having computer instructions stored thereon, wherein when the computer instructions are running on a communication device, the communication device is caused to perform the method of any one of claims 1 to 21.
